(19) Europäisches Patentamt
European Patent Office
Office européen des brevets

(11) EP 2 902 843 B1

(12) **EUROPEAN PATENT SPECIFICATION**

(45) Date of publication and mention of the grant of the patent:
**26.12.2018 Bulletin 2018/52**

(21) Application number: **13842911.3**

(22) Date of filing: **26.09.2013**

(51) Int Cl.:
***G03B 21/14*** (2006.01) ***C08F 2/44*** (2006.01)
***C08F 2/48*** (2006.01) ***C09K 19/38*** (2006.01)
***G02F 1/13*** (2006.01) ***G02F 1/133*** (2006.01)
***G02F 1/1334*** (2006.01) ***G03B 21/60*** (2014.01)
***G09G 3/20*** (2006.01) ***G09G 3/36*** (2006.01)

(86) International application number:
**PCT/JP2013/076137**

(87) International publication number:
**WO 2014/051002 (03.04.2014 Gazette 2014/14)**

(54) **IMAGE DISPLAY DEVICE**

BILDANZEIGEVORRICHTUNG

DISPOSITIF D'AFFICHAGE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2012 JP 2012215006**

(43) Date of publication of application:
**05.08.2015 Bulletin 2015/32**

(73) Proprietor: **Mitsubishi Chemical Corporation**
**Tokyo 100-8251 (JP)**

(72) Inventors:
- **KIDA, Noriyuki**
**Yokohama-shi, Kanagawa 227-8502 (JP)**
- **KADOWAKI, Masami**
**Yokohama-shi, Kanagawa 227-8502 (JP)**

(74) Representative: **Vossius & Partner**
**Patentanwälte Rechtsanwälte mbB**
**Siebertstrasse 3**
**81675 München (DE)**

(56) References cited:
**WO-A1-2009/000521 WO-A1-2012/060306**
**JP-A- 2002 541 515 JP-A- 2004 184 979**
**JP-A- 2004 184 980 JP-A- 2010 531 468**
**US-A- 5 437 811 US-A1- 2012 140 147**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 902 843 B1

## Description

### Technical Field

The present invention relates to an image display device configured from a screen and an image projector. Specifically, the invention relates to an image display device in which a screen and an image projector are synchronized such that the image projector projects an image on a part of the screen or on the whole screen when the screen is in a light-scattering state, and does not project an image when the screen is in a light-transmitting state.

### Background Art

A see-through display has been developed that displays an image on a transparent medium such as window glass and a film while allowing an observer to see the background through a non-displaying portion of the screen.

Transparent LCDs (Liquid Crystal Displays), transparent OLEDs (Organic Light Emitting Diodes), and transparent PDPs (Plasma Display Panels) are known examples of conventional see-through displays that use transparent FPD (Flat Panel Display) members. However, these displays can achieve at most only about 50% light transmittance in a non-displaying portion, and do not allow a user to see the background in a dark environment.

On the other hand, a see-through display technology is known that uses a transparent screen that is switchable between a light-transmitting state and a light-scattering state, and in which a projector forms a projected image for observation when the screen is in a light-scattering state. Patent Literature 1 discloses a display system that periodically switches a screen between a light-transmitting state and a light-scattering state, and synchronizes the image projection by a projector with the screen modulation. In this system, the time of the light-scattering state of the screen is confined within a certain proportion in a cycle to enable a see-through display. ' The setting can be changed to increase the frequency of the screen modulation, and prevent flickers on displayed image.

This display technique can achieve greater than 50% light transmittance in a non-displaying portion, and provide a more transparent image.

Known switchable screens that switch between a light-transmitting state and a light-scattering state use a liquid crystal-polymeric resin complex as the modulation layer. Examples of such complexes include polymer dispersed liquid crystals (PDLCs), and polymer stabilized cholesteric textures (PSCTs). PDLCs are problematic because of their large temperature dependence of visible light transmissivity, and large viewing angle dependence. PSCTs, on the other hand, have small temperature dependence and viewing angle dependence of visible light transmissivity. This, combined with the fast response speed of the element, makes PSCTs promising for use as a switchable screen.

Patent literature 2 discloses a specific display panel comprising a first substrate including a wire; a second substrate provided so as to face the first substrate; and a display medium provided between the first substrate and the second substrate, the display medium being switched between a light transmitting state and a light scattering state in correspondence with presence or absence of an electric field applied to the display medium, the display panel including no colored layer.

Patent literature 3 relates to an image display apparatus provided with a screen comprising a liquid crystal layer generating either of a light ray transmitting state and a light ray scattering state interposed between a pair of transparent substrates with electrodes attached thereto and an image projecting device to project the image on the screen, a frame consisting of a minimum repeating unit of a group of the light ray transmitting states.

Patent literature 4 discloses a polymer-dispersed liquid crystal system, comprising a continuous polymer structure having defined therein a plurality of discrete bodies of liquid crystal material, said bodies of liquid crystal material exhibiting a polydomain operating state in which the liquid crystal material within each body is arranged in multiple domains, each domain being defined by a quantity of liquid crystal material whose molecules have a substantially common identifiable alignment in at least one axis, wherein the resolved alignments of neighbouring domains diverge substantially from one another and are stable over time.

Patent literature 5 relates to a light modulating cell comprising liquid crystalline light modulating material of a liquid crystal and polymer, the liquid crystal being a chiral nematic liquid crystal having positive dielectric anisotropy and including chiral material in an amount effective to form focal conic and twisted planar textures, the polymer being distributed in phase separated domains in the cell in an amount that stabilizes the focal conic and twisted planar textures in the absence of a field and permits the liquid crystal to change textures upon the application of a field.

### Citation List

#### Patent Literature

PTL 1: JP-A-2004-184979
PTL 2: US-A-2012/140147
PTL 3: JP-A-2004-184979
PTL 4: WO-A1-2009/000521
PTL 5: US-A-5,437,811

## Summary of Invention

### Technical Problem

The display technique of Patent Literature 1 can provide a sufficient background view with the periodic driving in which the time of the light-scattering state in the screen is confined within a small proportion. However, this comes with a pale image. The image can be enhanced by increasing the proportion of the time of the light-scattering state in the screen. However, this causes a blur in the background. That is, there is a trade-off between image visibility and background transmissivity. Patent Literature 1 indicates using a strong light source for displaying a clear, sharp image while ensuring background transmissivity. However, this is problematic because such a light source requires a large projector, and obstructs the view of the observer seeing the background. The rear projection technique is also considered problematic because it involves strong light directed to the observer, and any leakage of light through the screen may cause discomfort to the user. There is also a potential safety problem, particularly in laser projectors.

The present invention has been made in view of the foregoing problems, and it is an object of the present invention to provide an image display device that can achieve the transparency of a non-displaying portion and the visibility of a projected image without using a strong light source.

### Solution to Problem

The present inventors conducted intensive studies to solve the foregoing problems, and found that an image display device configured from a switchable screen and an image projector for projecting an image on the screen can achieve the transparency of a non-displaying portion and the visibility of a projected image without using a strong light source when the device is adapted to use a specific screen, and cause the image projector to project an image in synchronization with the screen by using a specific method. The present invention was completed on the basis of this finding.

Specifically, the gist of the present invention resides in the following.

[1] An image display device comprising:

at least one screen;
an image projector for projecting an image on the screen; and
a control unit that periodically switches between a light-transmitting state and a light-scattering state of the screen,
wherein the screen includes: a pair of oppositely disposed substrates having an electrode, at least one of which is a transparent substrate, and a liquid crystal light modulating layer provided between the pair of substrates having an electrode, the liquid crystal light modulating layer containing a complex that contains a chiral nematic liquid crystal phase of positive dielectric constant anisotropy, and a solid phase of polymeric resin,
wherein the screen is in a light-transmitting state under no applied voltage, and is switchable to a light-scattering state in response to applied voltage,
wherein the screen and the image projector are synchronized such that the image projector projects an image on a part of the screen or on the whole screen when the screen is in a light-scattering state, and projects no image when the screen is in a light-transmitting state, and
wherein the control unit controls the periodic switching so that a switching frequency is 40 Hz to 100 Hz, and a light-scattering state duty ratio is 0.01 to 0.20 wherein the screen has a haze of 20% or less in a light-scattering state portion under an applied burst voltage having a frequency of 40 Hz to 100 Hz and a duty ratio of 0.01 to 0.20.

[2] The image display device according to the [1] above, wherein the periodic switching is performed at $\tau_{ON}/(\tau_{ON} + \tau_{OFF})$ of 0.01 to 020, where $\tau_{OFF}$ is a time with a parallel light transmittance of 30% or more, and $\tau_{ON}$ is a time with a parallel light transmittance of less than 30%.

[3] The image display device according to the [1] or [2] above, wherein the screen has a rise response time $\tau_1$ of 3.0 ms or less, and a fall response time $\tau_2$ of 3.0 ms or less in the process of changing from the light-transmitting state to the light-scattering state and returning to the light-transmitting state when a burst voltage at a frequency of 40 Hz to 100 Hz and a duty ratio of 0.01 to 0.20 is applied to the screen.

[4] The image display device according to any one of the [1] to [3] above, wherein the screen has a haze of 10% or less under no applied voltage.

[5] The image display device according to any one of the [1] to [4] above, wherein, when being synchronized such that the image projector projects an image on a part of the screen or on the whole screen when the screen is in a light-scattering state, and projects no image when the screen is in a light-transmitting state, and being driven to periodically switch between the light-transmitting state and the light-scattering state, a white display-to-black display radiance ratio is 30 or more in all angles within a 30° angle with respect to an incident direction of an image projected by the image projector and falling on the screen.

[6] The image display device according to any one of the [1] to [5] above, wherein the chiral nematic liquid crystal has a chiral pitch p of 0.3 $\mu$m to 3 $\mu$m.

[7] The image display device according to any one of the [1] to [6] above, wherein the ratio d/p of the distance d between the substrates having an electrode, and the chiral pitch p of the chiral nematic liquid crystal is 1 or more.

[8] The image display device according to any one of the [1] to [7] above, wherein the liquid crystal light modulating layer is obtained by photo-curing a mixture of the chiral nematic liquid crystal of positive dielectric constant anisotropy and a polymer precursor represented by the following general formula (1):

[Chem. 1]

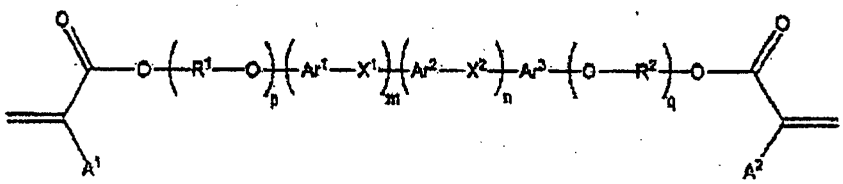

(1)

wherein $A^1$ and $A^2$ each independently represent a hydrogen atom or methyl,
$Ar^1$, $Ar^2$, and $Ar^3$ each independently represent an optionally substituted bivalent aromatic hydrocarbon group, or an optionally substituted bivalent heterocyclic aromatic group,
$X^1$ and $X^2$ each independently represent a direct bond, a carbon double bond, a carbon triple bond, an ether bond, an ester bond, optionally substituted linear alkylene of 1 to 6 carbon atoms, or optionally substituted linear oxyalkylene of 1 to 6 carbon atoms,
$R^1$ and $R^2$ each independently represent optionally substituted linear alkylene of 1 to 6 carbon atoms, optionally substituted linear oxyalkylene of 1 to 6 carbon atoms, or linear alkyl ester of 2 to 6 carbon atoms,
m, n, p, and q each independently represent 0 or 1, and
at least one of $Ar^1$, $Ar^2$ and $Ar^3$ represents an optionally substituted bivalent fused aromatic hydrocarbon group or an optionally substituted bivalent heterocyclic aromatic group.

[9] The image display device according to the [8] above, wherein the polymer precursor represented by the general formula (1) is represented by the following general formula (2):

[Chem. 2]

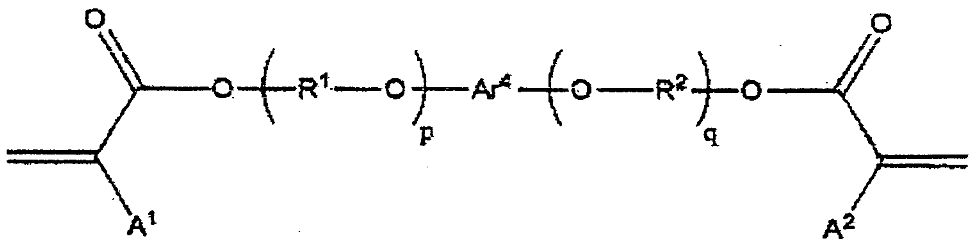

(2)

wherein $A^1$ and $A^2$ each independently represent a hydrogen atom or methyl,
$Ar^4$ represents an optionally substituted bivalent fused aromatic hydrocarbon group, or an optionally substituted bivalent fused aromatic heterocyclic group,
$R^1$ and $R^2$ each independently represent optionally substituted linear alkylene of 1 to 6 carbon atoms, optionally substituted linear oxyalkylene of 1 to 6 carbon atoms, or linear alkyl ester of 2 to 6 carbon atoms, and

p and q each independently represent 0 or 1.

[10] The image display device according to the [9] above, wherein $Ar^4$ in the general formula (2) is an optionally substituted bivalent naphthalene ring. Disclosed herein is a screen that is a light-transmitting state under no applied voltage, and that is switchable to a light-scattering state in response to applied voltage,
wherein the screen periodically switches between a light-transmitting state and a light-scattering state, and has a haze of 20% or less in a light-scattering state portion under an applied burst voltage having a switching frequency of 40 Hz to 100 Hz and a periodic switching duty ratio of 0.01 to 0.20, and
wherein the screen includes: a pair of oppositely disposed substrates having an electrode, at least one of which is transparent; and a liquid crystal light modulating layer provided between the pair of substrates having an electrode, the liquid crystal light modulating layer containing a complex that contains a chiral nematic liquid crystal phase of positive dielectric constant anisotropy, and a solid phase of polymeric resin.

Advantageous Effects of Invention

The image display device of the present invention has use in applications such as in billboards, computer terminals, and projection.

Brief Description of Drawings

Fig. 1 is a diagram representing the relationship between the applied waveform to a display of the present invention and the response waveform of a screen.
FIG. 2 is a diagram representing an exemplary structure of a display device of the present invention.
FIG. 3 is a diagram representing an example of the image projection timing by an image projector against a screen (image projection being started at the timing when the screen switches from a light-transmitting state to a light-scattering state, and ending at the timing when the screen completely switches to the light-transmitting from the light-scattering state).
FIG. 4 is a diagram representing an example of the image projection timing by an image projector against a screen (the time of the voltage application to a liquid crystal light modulating layer is the same as the time of the image projection by the image projector).
FIG. 5 is a diagram representing an example of the image projection timing by an image projector against a screen (the image projector projects an image while the parallel light transmittance of the screen is the lowest in $T_{min}$).
FIG. 6 is a diagram representing the relationship between applied waveform and screen response waveform according to the present invention.
FIG. 7 is a diagram representing an exemplary configuration of the image display device in Example 4 of the present invention.
FIG. 8 is a diagram representing the radiance spectra of the screen portion of the image display device of Example 4.

Description of Embodiments

The following descriptions of the constituting elements below serve to illustrate an embodiment of the present invention (representative examples), and the contents of the following descriptions in no way specify the present invention.
The image display device of the present invention is configured from one or more screens, and an image projector for projecting an image on the screen. At least one of the screens is disposed relative to the image projector.
The screen is switchable between a light-transmitting state and a light-scattering state, and is synchronized with the image projector such that the image projector projects an image on a part of the screen or on the whole screen when the screen is in a light-scattering state, or while the screen is making a transition from a light-transmitting state to a light-scattering state, and that the image projector does not project an image when the screen is in a light-transmitting state. This synchronous switching is repeated at a speed untrackable by the human eye so that a user can see a projected image out of the screen. As used herein, "light" means visible light (wavelengths of 380 to 800 nm), unless otherwise stated.
The screen used in the present invention is a switchable screen that is in a light-transmitting state under no applied voltage, and that can switch to a light-scattering state in response to an applied voltage. The screen can remain transparent under normal conditions (under no applied voltage), and can display an image in a light-scattering state in response to an applied voltage, for example, in applications such as a showcase. The screen is therefore useful for saving energy.
The screen includes a pair of transparent substrates at least one of which is transparent, a pair of oppositely

disposed substrates having an electrode, and a liquid crystal light modulating layer provided between the pair of substrates having an electrode, the liquid crystal light modulating layer containing a complex that contains a chiral nematic liquid crystal phase of positive dielectric constant anisotropy, and a solid phase of polymeric resin. The switching between the light-transmitting state and the light-scattering state can be realized by electrically driving the liquid crystal light modulating layer. The liquid crystal light modulating layer may use a transmissive-scattering liquid crystal phase-solid phase of polymeric resin complex that can electrically switch between a light-transmitting state and a light-scattering state.

The liquid crystal light modulating layer used in the present invention is in a light-transmitting state under no applied voltage, and switches to a light-scattering state in response to a DC voltage, AC voltage, or pulse voltage, or a combination of these, applied with an effective value equal to or greater than a threshold. The liquid crystal light modulating layer may be driven in a reverse mode whereby the liquid crystal light modulating layer returns to a light-transmitting state upon removal of the applied voltage, or in a memory mode in which a voltage is applied only for the switching between a light-transmitting state and a light-scattering state.

The screen has high contrast between a light-transmitting state and a light-scattering state, and can display a clear image without the need to particularly provide a strong light source for the image projector.

The screen is driven in such a manner that the screen periodically switches between a light-transmitting state and a light-scattering state at a frequency of 40 Hz to 100 Hz. As used herein, "light-scattering state" refers to a state with a parallel light transmittance of less than 30%, and "light-transmitting state" refers to a state with a parallel light transmittance of 80% or more. The state of the screen being driven to periodically switch between a light-transmitting state and a light-scattering state will also be referred to as "display mode".

The switching between a light-transmitting state and a light-scattering state typically involves an intermediate transient state, and the parallel light transmittance may temporarily take a value or 30% or more and less than 80% while the screen is being driven in a display mode. The term "periodic driving" typically means that the driving is exactly the same for every cycle. However, the driving is not necessarily required to be the same, as long as it does not depart from the gist of the present invention.

The periodic switching of the screen between a light-transmitting state and a light-scattering state is performed at a frequency of 40 Hz or more, preferably 45 Hz or more, and 100 Hz or less, preferably 70 Hz or less, further preferably 60 Hz or less. Flickers occur on the screen in a display mode at a frequency below 40 Hz.

Flickers tend to decrease as the frequency increases. However, the parallel light transmittance in a light-scattering state may not sufficiently decrease, and the image visibility may suffer when the screen response speed fails to follow the frequency. A flicker-less image with sufficient visibility can be obtained by confining the frequency within the specific ranges.

The duty ratio of the periodic switching of the screen used in the present invention ranges from 0.01 to 0.20. The screen duty ratio is the proportion of the time of the light-scattering state in the periodic switching between a light-transmitting state and a light-scattering state.

The duty ratio of the periodic switching of the screen is 0.01 or more, preferably 0.05 or more, and 0.20 or less, preferably 0.15 or less. Smaller duty ratios reduce the screen haze in a display mode, and improve the background transmissivity. With a duty ratio of 0.20 or less, the screen can provide a desirable background view even when an image is displayed in a display mode in a dark environment such as a room. Larger duty ratios tend to produce a clearer display image. Image visibility and background transmissivity can be satisfied at the same time by confining the duty ratio in the specific ranges.

In the periodic switching of the present invention, $\tau_{ON}/(\tau_{ON} + \tau_{OFF})$ is preferably 0.01 or more, further preferably 0.05 or more, and is preferably 0.20 or less, further preferably 0.15 or less, where $\tau_{OFF}$ is the time in which the parallel light transmittance of the screen is 30% or more, and $\tau_{ON}$ is the time in which the parallel light transmittance is less than 30%. Image visibility and background transmissivity can be satisfied at the same time by confining $\tau_{ON}/(\tau_{ON} + \tau_{OFF})$ within the specific ranges.

Parallel light transmittance can be measured in terms of $T = I/I_0$, where I is the radiant emittance of the transmitted light through a sample, and $I_0$ is the radiant emittance of incident light. Instantaneous parallel light transmittance can be measured by using, for example, a commercially available high-speed spectroscope or high-speed luminance meter.

The display mode of the present invention can be realized by applying a burst voltage (hereinafter, also referred to as "pulse voltage") to the liquid crystal light modulating layer. The burst voltage or pulse voltage has a frequency of 40 Hz to 100 Hz, and an effective value exceeding the threshold of the liquid crystal light modulating layer, and is applied at a duty ratio of 0.01 to 0.20.

The liquid crystal light modulating layer of the screen typically require a finite amount of time before the parallel light transmittance sufficiently diminishes during the transition to the light-scattering state in response to an applied voltage. The liquid crystal light modulating layer also requires a finite amount of time before the parallel light transmittance sufficiently increases during the transition to the light-transmitting state. Such a transient state in which the parallel light transmittance fluctuates with time undesirably causes situations where the parallel light transmittance remains low in times when a light-transmitting state is needed, or the parallel light transmittance remains high in times when a light-scattering state is needed. This may lead to a low transmissivity or low display image visibility in the display mode.

Response time as referred to in this specification is described below with reference to FIG 1. Here, the parallel light transmittance under no applied voltage to the screen is $T_{max}$, the minimum value of parallel light transmittance under applied voltage is $T_{min}$, the start time of pulse voltage application is $t_1$, and the end time of voltage application is $t_2$. The rise response time, $\tau_1$, is defined as the time it takes for the parallel light transmittance to first reach $T_{10}$ from $t_1$, and the fall response time, $\tau_2$, is defined as the time for the parallel light transmittance to first reach $T_{90}$ from $t_2$. $T_{10}$ and $T_{90}$ are represented as follows.

$$T_{10} = 0.1 \times (T_{max} - T_{min})$$

$$T_{90} = 0.9 \times (T_{max} - T_{min})$$

The rise response time $\tau_1$ and the fall response time $\tau_2$ of the screen are both preferably 3.0 ms or less, further preferably 2.0 ms or less in the screen making a transition from a light-transmitting state to a light-scattering state, and returning to a light-transmitting state in response to an applied burst voltage of 40 Hz to 100 Hz frequency with a duty ratio of 0.01 to 0.20.

Image visibility and background transmissivity tend to be satisfied because $\tau_1$ or $\tau_2$ is not as long as the pulse width of the applied voltage.

In the synchronization of the screen periodic driving and the image projector according to the present invention, the parallel light transmittance of the screen is preferably less than 30%, preferably less than 20% for the time of the image projection by the image projector. For other periods, the screen should have as high a parallel light transmittance as possible, preferably 80% or more. On the other hand, the projected image lacks sufficient visibility, and the transparency becomes low in a transient state in which the parallel light transmittance of the screen is 30% or more and less than 80%. The screen used in the present invention can have a short transient state, and can satisfy image visibility and background transmissivity at the same time. Preferably, $\tau_1$ and $\tau_2$ should have the same or approximate values for ease of controlling synchronization.

The haze occurring in the light-scattering state in the screen has the definition according to the measurement method of JIS K7136 (2000). Haze referred to in this specification is a measured time-average quantity.

The radiance of a displayed image by the image display device of the present invention is calculated by integrating the measured spectral radiance (JIS Z8724 (1997)) over the visible light wavelength region.

The screen can be made more background-oriented or image-oriented by adjusting the duty ratio of periodic switching. Specifically, reducing the duty ratio of periodic switching can reduce the screen haze in the display mode, but it also decreases the radiance of the displayed image. Conversely, increasing the duty ratio of periodic switching increases the screen haze in the display mode, and the radiance of the display image.

The haze in a display mode under an applied burst voltage of 40 Hz to 100 Hz frequency with a duty ratio of 0.01 to 0.20 is preferably 20% or less, further preferably 15% or less, and is preferably 1% or more, further preferably 5% or more. Background transmissivity tends to improve when the haze is not overly large, and luminance levels sufficient for observation of a displayed image can be obtained with haze values that are not excessively small.

In the present invention, the screen and the image projector may be in a rear projection layout in which an observer and the image projector are opposite from each other with respect to the screen, or in a front projection layout in which an observer and the image projector are on the same side of the screen. The former should be used when strong back scattering occurs in the liquid crystal light modulating layer in a light-scattering state, and the latter should be used in the case of strong forward scattering. The image projector may be installed so that the light exit port of the image projector is perpendicular to the screen, or may be installed with an angle. It is also possible to install the image projector with an angle that hides the image projector from the view of an observer. In this case, it is preferable to calibrate the shape of a projected image against the display portion of the screen.

A black display in the image display device of the present invention is the state where no light is projected onto the screen from the image projector ((R, G, B) = (0, 0, 0)). A white display is the state where the radiance of the projected light from the image projector is equally at the maximum ((R, G, B) = (255, 255, 255)). The contrast of a displayed image is given by (radiance of white display)/(radiance of black display).

It is preferable in the screen that the luminance ratio takes a specific value over a specific range of image incident directions. Specifically, the image projector and the screen are synchronized such that the image projector projects an image on a part of the screen or on the whole screen when the screen is in a light-scattering state, and that the image projector does not project an image when the screen is in a light-transmitting state. Here, the screen is driven to periodically switch between a light-transmitting state and a light-scattering state. For such driving, the white display/black display radiance ratio is preferably 30 or more, further preferably 60 or more within a 30° incident angle of the image projected by the image projector onto the screen.

By satisfying such display characteristics, image visibility becomes desirable even when the screen is seen from oblique directions. Visibility also remains desirable even when an image is projected onto the screen from oblique directions.

The image display device of the present invention can provide desirable visibility for the following reason. The liquid crystal light modulating layer of the screen used in the present invention scatters light with the composite structure of the focal conic phase of a chiral nematic liquid crystal and a network of polymers. The focal conic phase of a random liquid crystal polydomain structure, and the random network polymer structure scatter incident light over a wide range, and provide a wide viewing angle. The screen can thus provide desirable image visibility even when seen in an oblique direction as above.

The screen is in a light-transmitting state under no applied voltage, and the haze in this state should preferably be 10% or less, further preferably 8% or less, particularly preferably 5% or less. The screen switches to a light-scattering state in response to an applied voltage, and the haze should preferably become 85% or more, more preferably 90% or more in the presence of continuous waves of DC voltage or AC voltage applied to the screen. The upper limit of haze is 100%, and the haze should preferably be as high as possible. The visibility of a displayed image tends to improve when the haze falls within these ranges.

The upper limit of the operating temperature of the screen is the liquid crystal-isotropic phase transition temperature (Tni) of the chiral nematic liquid crystal phase, and the response time tends to increase at low temperatures. The operating temperature range is preferably -10°C or more, further preferably 0°C or more, and is preferably 60°C or less, further preferably 40°C or less. The screen includes a pair of transparent substrates at least one of which is transparent, a pair of oppositely disposed substrates having an electrode, and a liquid crystal light modulating layer provided between the pair of substrates having an electrode, the liquid crystal light modulating layer containing a complex that contains a chiral nematic liquid crystal phase of positive dielectric constant anisotropy, and a solid phase of polymeric resin.

<Liquid Crystal Light Modulating Layer>

The liquid crystal light modulating layer used in the screen contains a complex of a chiral nematic liquid crystal phase of positive dielectric constant anisotropy, and a solid phase of polymeric resin. This mode is known as PSCT.

The following describes the drive mode of the reverse mode PSCT. In the reverse mode PSCT, the liquid crystals are in a light-transmitting state under no applied voltage, with substantially all the liquid crystal helical axes being perpendicular to the substrates in a planar phase. In response to an applied voltage to the liquid crystal light modulating layer across the electrode substrates, the liquid crystals make a phase transition to a focal conic phase, and become a light-scattering state, with the liquid crystal helical axes being randomly oriented in the layer. The parallel light transmittance of the screen can be controlled by switching these two phases.

By increasing the applied voltage to the liquid crystal light modulating layer across the electrode substrates, the liquid crystals make a phase transition to a homeotropic phase, and become a light-transmitting state, with the long axes of the liquid crystal molecules being perpendicularly oriented with respect to the substrates.

<Chiral Nematic Liquid Crystal>

The chiral nematic liquid crystal used in the screen has a positive dielectric constant anisotropy. By virtue of the positive dielectric constant anisotropy of the chiral nematic liquid crystal of the present invention, both $T_{min}$ and $\tau_1$ and $\tau_2$ can be reduced at the same time.

The dielectric constant anisotropy ($\Delta\varepsilon$) of the chiral nematic liquid crystal is not particularly limited, as long as it is a positive value, and is preferably 5 or more, more preferably 8 or more in terms of reducing the screen driving voltage. When a polymerization initiator is used, it is preferable that the individual molecules forming the chiral nematic liquid crystal do not have an absorption at the absorption wavelength of the initiator. This makes it possible to cure the polymerizable monomer in a shorter time period.

The chiral nematic liquid crystal may be an aggregate of liquid crystal compounds with the cholesteric phase arising from the liquid crystals themselves, or may be a nematic liquid crystal that becomes chiral by addition of a chiral agent From the standpoint of liquid crystal composition design, it is preferable to add a chiral agent to a nematic liquid crystal as needed for the intended purpose, and control the chiral pitch (p) and the liquid crystal-isotropic phase transition temperature (Tni).

For shorter rise response time $\tau_1$, it is more advantageous to increase the applied voltage to the liquid crystal light modulating layer across the electrode substrates. However, there is a dilemma in that an excessively high applied voltage causes a phase transition to a homeotropic phase, and scattering of light becomes insufficient. This can be

overcome by making the d/p value preferably 1 or more, where d is the distance between the electrode substrates, and p is the chiral pitch of the chiral nematic liquid crystal. The d/p value is more preferably 2 or more, further preferably 4 or more, and is preferably 20 or less, particularly preferably 12 or less.

Larger d/p values enhance the scattering during driving, and improve the light shield properties. Further, with larger d/p values, the threshold voltage for the transition from the focal conic phase to the homeotropic phase increases, preventing a phase transition to a light-transmitting state even under high applied voltage, and maintaining the light-scattering state. This makes it possible to shorten the rise response time $\tau_1$. On the other hand, because the screen drive voltage (threshold voltage for a transition from the planar phase to the focal conic phase) also increases at the same time, the d/p value should be confined in the foregoing ranges in terms of achieving a good balance between light shield properties, energy consumption, and safety.

The chiral pitch p of the chiral nematic liquid crystal is preferably 0.3 μm or more, further preferably 0.8 μm or more, and is preferably 3 μm or less, further preferably 2 μm or less.

The screen drive voltage tends to remain low when the chiral pitch p is not overly small, and the contrast tends to improve when the chiral pitch p is not excessively large.

The chiral pitch p is typically inversely proportional to the concentration of the chiral agent, and the concentration of the chiral agent may be calculated back from the necessary value of chiral pitch p. When p × n (n is the refractive index of the chiral nematic liquid crystal) is in the visible light wavelength (380 nm to 800 nm) range, the screen becomes colored under no applied voltage. The screen becomes colorless transparent under no applied voltage when p × n is outside of the visible light range. The chiral pitch p should thus be selected according to the intended purpose.

The distance d between the electrode substrates of the screen needs to be equal to or greater than the chiral pitch p of the chiral nematic liquid crystal used. Typically, the distance d is preferably 3 μm or more, further preferably 5 μm or more, and is preferably 100 μm or less, further preferably 20 μm or less.

The optical transmittance of the screen in the absence of applied voltage decreases as the distance d increases, and the display response time may increase with increase of distance d. On the other hand, when the distance d is too small, the light shield properties during the driving of the screen may become weak, and the screen may be shorted when it has a large area. These requirements can be satisfied in good balance by confining the distance d in the foregoing ranges.

The liquid crystal-isotropic phase transition temperature Tni of the chiral nematic liquid crystal determines the upper limit of the screen operating temperature, and is preferably 50°C or more, further preferably 70°C or more. On the other hand, liquid crystal-isotropic phase transition temperature Tni is preferably 200°C or less, further preferably 150°C or less, because the viscosity tends to increase with increase of Tni.

Any known nematic liquid crystal may be used, and the skeleton, the substituents, and the molecular weight of the constituting molecules are not particularly limited. The nematic liquid crystal may be a synthesized product, or a commercially available product. The nematic liquid crystal preferably has a positive dielectric constant anisotropy to provide a positive dielectric constant anisotropy for the chiral nematic liquid crystal phase of the screen, and the chiral nematic liquid crystal of the liquid crystal composition. When a polymerization initiator is used, it is preferable that the individual molecules forming the nematic liquid crystal do not have an absorption at the absorption wavelength of the initiator. This makes it possible to cure the polymerizable monomer in a shorter time period.

When known liquid crystal materials are used, liquid crystal materials may be selected from various low molecular compounds such as biphenyl, phenylcyclohexane, and cyclohexylcyclohexane compounds, and mixtures thereof as described in, for example, Liquid Crystal Device Handbook, Japan Society for the Promotion of Science 142 Committee, Nihon Kogyo Shimbun (1989), pp. 152 to 192, and Ekisho Binran, Ekisho Binran Editorial Committee, Maruzen Co., Ltd. (2000), pp. 260 to 330. It is also possible to use polymeric compounds or mixtures thereof as described in, for example, Ekisho Binran, Ekisho Binran Editorial Committee, Maruzen Co., Ltd. (2000), pp. 365 to 415. The following are examples of compounds that form nematic liquid crystals.

[Chem. 3]

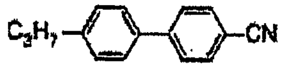
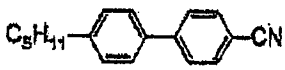
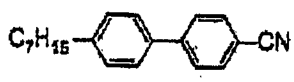
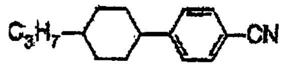
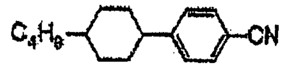
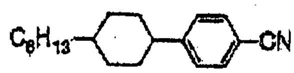
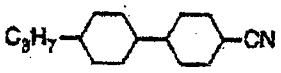
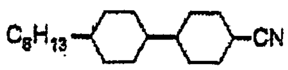
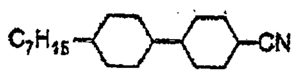
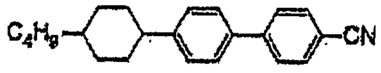
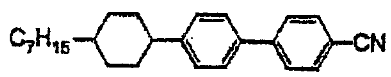
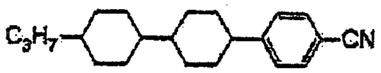
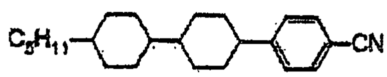
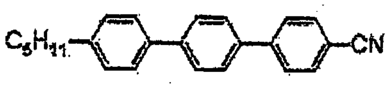
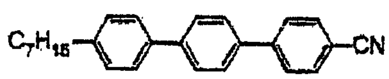
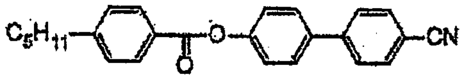
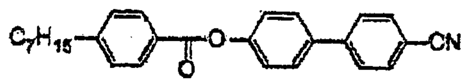
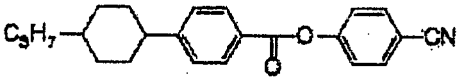
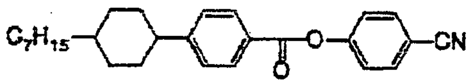
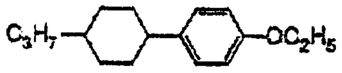
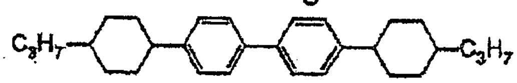
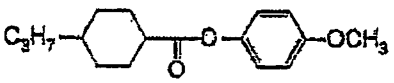
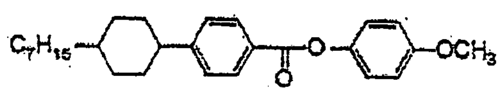
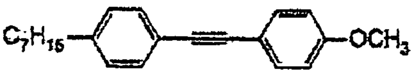
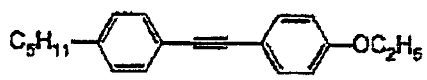
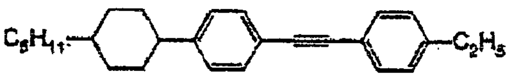
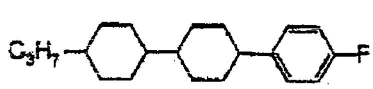
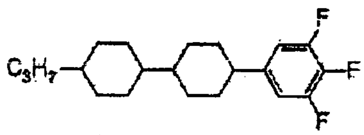
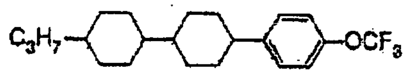
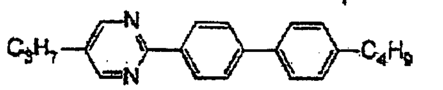
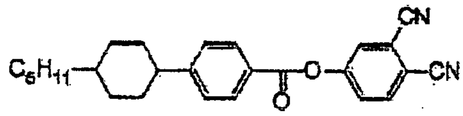
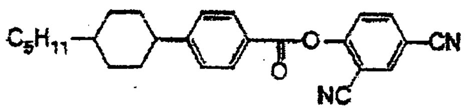
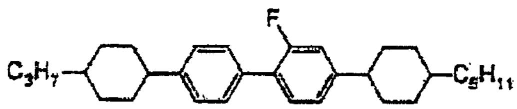
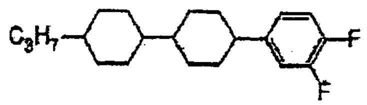

In terms of the screen response speed and ease of production, preferred as cholesteric liquid crystals and nematic liquid crystals are those having low viscosities and high dielectric constant anisotropies.

The chiral agent may be any chiral compound, as long as it is miscible to the host liquid crystal, and may be a synthesized product or a commercially available product. The chiral agent may be liquid crystalline itself, and may have a polymerizable functional group. The chiral agent may be dextrorotatory or levorotatory, and may be a mixture of a dextrorotatory chiral agent and a levorotatory chiral agent. In terms of reducing screen driving voltage and increasing response speed, the chiral agent is preferably one with a large positive dielectric anisotropy and a low viscosity. Also

preferred as the chiral agent are those having a large helical twisting power, an index of the liquid crystal twisting power of the chiral agent When a polymerization initiator is used, it is preferable that the chiral agent does not have an absorption at the absorption wavelength of the initiator.

Examples of the chiral agent include CB15 (Merck product), C15 (Merck product), S-811 (Merck product), R-811 (Merck product), S-1011 (Merck product), and R-1011 (Merck product).

<Solid Phase of Polymeric Resin>

The solid phase of polymeric resin of the present invention is preferably one that results from curing of a specific polymer precursor.

The solid phase of polymeric resin of the present invention is preferably 10 mass% or less, further preferably 7 mass% or less, and is preferably 0.1 mass% or more, preferably 1 mass% or more with respect to the chiral nematic liquid crystal phase. The mechanical strength of the solid phase of polymeric resin, and the repetition durability tend to improve when the proportion of the solid phase of polymeric resin is not overly small. Further, with such a proportion of the solid phase of polymeric resin, the liquid crystal molecules experience sufficient interface interactions, and the screen contrast and the response speed may increase. On the other hand, the drive voltage can be reduced, and the screen transparency tends to improve by not making the proportion of the solid phase of polymeric resin overly high.

The polymeric resin used for the solid phase of polymeric resin of the present invention is not particularly limited, as long as it is not detrimental to the advantages of the present invention. It is, however, preferable to use a cured product of a mixture containing a polymer precursor represented by the following general formula (1), because such products make it easier to reduce the minimum value $T_{min}$ of the parallel light transmittance of the screen under applied voltage while reducing $\tau_1$ and $\tau_2$ at the same time.

[Chem. 4]

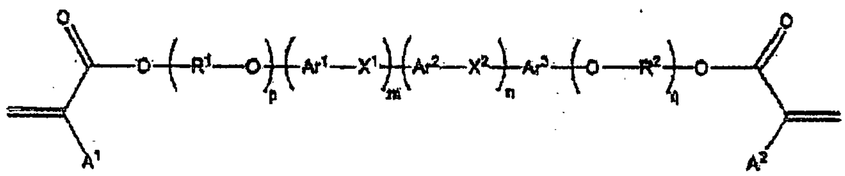

(1)

In formula (1), $A^1$ and $A^2$ each independently represent a hydrogen atom or methyl,
$Ar^1$, $Ar^2$, and $Ar^3$ each independently represent an optionally substituted bivalent aromatic hydrocarbon group, or an optionally substituted bivalent heterocyclic aromatic group,
$X^1$ and each independently represent a direct bond, a carbon double bond, a carbon triple bond, an ether bond, an ester bond, optionally substituted linear alkylene of 1 to 6 carbon atoms, or optionally substituted linear oxyalkylene of 1 to 6 carbon atoms,
$R^1$ and $R^2$ each independently represent optionally substituted linear alkylene of 1 to 6 carbon atoms, an optionally substituted linear oxyalkylene of 1 to 6 carbon atoms, or linear alkyl ester of 2 to 6 carbon atoms, and
m, n, p, and q each independently represent 0 or 1.

At least one of $Ar^1$, $Ar^2$, and $Ar^3$ represents an optionally substituted bivalent fused aromatic ring group, or an optionally substituted bivalent heterocyclic aromatic group.

The optionally substituted bivalent aromatic hydrocarbon group represented by $Ar^1$, $Ar^2$, and $Ar^3$ is not particularly limited, as long as it is not detrimental to the advantages of the present invention. The bivalent aromatic hydrocarbon group may be a bivalent group obtained after removing two hydrogen atoms from a simple ring or a fused ring of 2 to 4 simple rings. Specific example include a benzene ring, a naphthalene ring, an anthracene ring, a phenanthrene ring, a perylene ring, a tetracene ring, a pyrene ring, a benzopyrene ring, a chrysene ring, a triphenylene ring, an acenaphthene ring, a fluoranthene ring, and a fluorene ring. Preferred are bivalent aromatic hydrocarbon groups of 6 or more carbon atoms. Preferred for polymerization curability are bivalent aromatic hydrocarbon groups of 30 or less, 26 or less, or particularly 18 or less carbon atoms. The following are specific examples of such structures.

[Chem. 5]

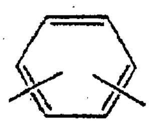 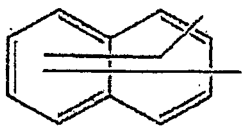 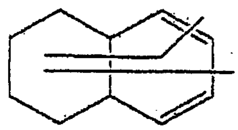

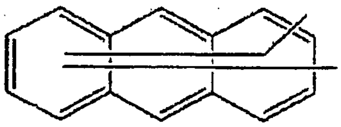 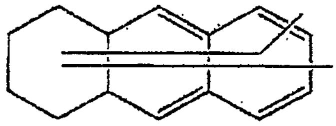

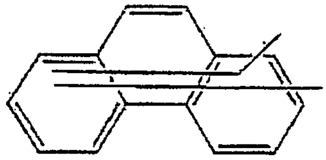 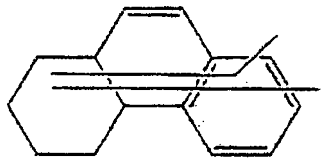

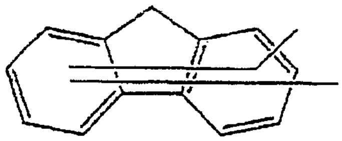

For curability of the polymer precursor, particularly preferred as the optionally substituted bivalent aromatic hydrocarbon group represented by $Ar^1$, $Ar^2$, and $Ar^3$ are the following structures.

[Chem. 6]

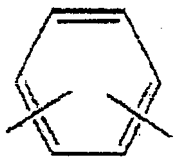 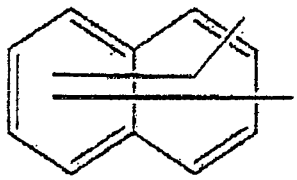

Examples of the possible substituents of the bivalent aromatic hydrocarbon group represented by $Ar^1$, $Ar^2$, and $Ar^3$ include a fluorine atom, a chlorine atom, hydroxyl, cyano, methyl, ethyl, n-propyl, isopropyl, methoxy, ethoxy, n-propoxy, isopropoxy, n-butyl group, isobutyl, and t-butyl. Preferred for curability of the polymer precursor are a fluorine atom, hydroxyl, cyano, methyl, and methoxy.

The optionally substituted bivalent heterocyclic aromatic group represented by $Ar^1$, $Ar^2$, and $Ar^3$ are not particularly limited, as long as it is not detrimental to the advantages of the present invention. The bivalent heterocyclic aromatic group may be a bivalent group obtained after removing two hydrogen atoms from a simple ring or a fused ring of 2 to 4 simple rings. Specific example include a furan ring, a benzofuran ring, a thiophene ring, a benzothiophene ring, a pyrrole ring, a pyrazole ring, an imidazole ring, an oxadiazole ring, an indole ring, a carbazole ring, a pyrroloimidazole ring, a pyrrolopyrazole ring, a pyrrolopyrrole ring, a thienopyrrole ring, a thienothiophene ring, a furopyrrole ring, a furofuran ring, a thienofuran ring, a benzoisooxazole ring, a benzoisothiazole ring, a benzoimidazole ring, a pyridine ring, a pyrazine ring, a pyridazine ring, a pyrimidine ring, a triazine ring, a quinoline ring, an isoquinoline ring, a cinnoline ring, a quinoxaline ring, a phenanthridine ring, a benzoimidazole ring, a perimidine ring, a quinazoline ring, a quinazolinone ring, and an azulene ring. Preferred are bivalent heterocyclic aromatic groups of 6 or more carbon atoms. Preferred for polymerization curability are bivalent heterocyclic aromatic groups of 30 or less, 26 or less, or particularly 18 or less carbon atoms. The following are specific examples of such structures.

[Chem. 7]

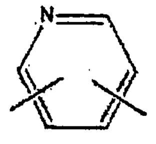
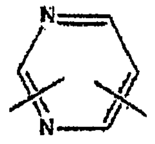
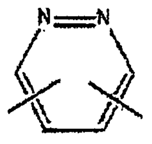
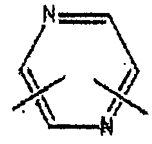

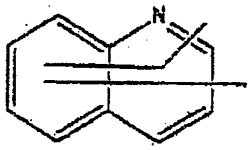
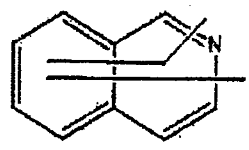
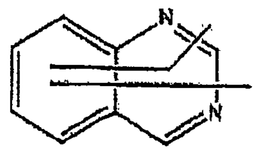

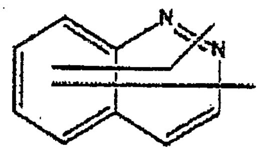
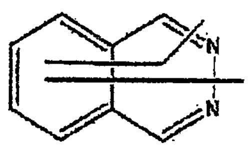
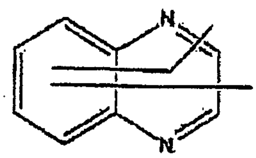

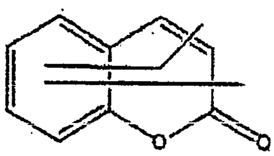
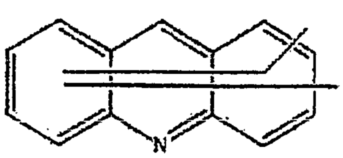
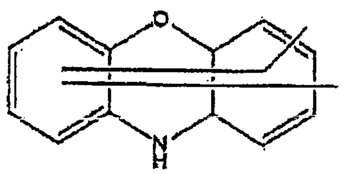

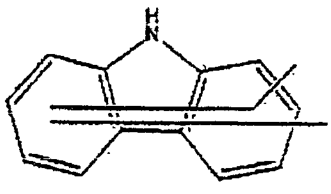
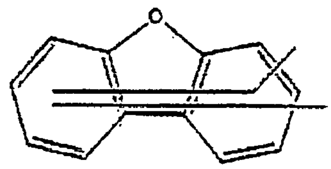

For curability of the polymer precursor, particularly preferred as the optionally substituted bivalent heterocyclic aromatic group represented by $Ar^1$, $Ar^2$, and $Ar^3$ are the following structures.

[Chem. 8]

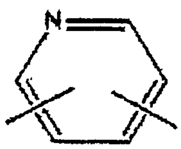
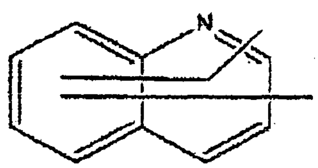
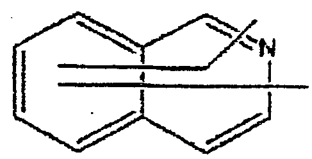

Examples of the possible substituents of the bivalent heterocyclic aromatic group represented by $Ar^1$, $Ar^2$, and $Ar^3$ include a fluorine atom, a chlorine atom, hydroxyl, cyano, methyl, ethyl, n-propyl, isopropyl, methoxy, ethoxy, n-propoxy, isopropoxy, n-butyl, isobutyl, and t-butyl. Preferred for curability of the polymer precursor are a fluorine atom, hydroxyl, cyano, methyl, and methoxy.

$X^1$ and each independently represent a direct bond, a carbon double bond, a carbon triple bond, an ether bond, an ester bond, optionally substituted linear alkylene of 1 to 6 carbon atoms, or optionally substituted linear oxyalkylene of 1 to 6 carbon atoms, preferably a direct bond, an ether bond, an ester bond, or methylene. Examples of the possible substituents include a fluorine atom, a chlorine atom, hydroxyl, cyano, methyl, ethyl, n-propyl, isopropyl, methoxy, ethoxy, n-propoxy, isopropoxy, n-butyl, isobutyl, and t-butyl. Preferred are a fluorine atom, hydroxyl, cyano, methyl, and methoxy.

$R^1$ and $R^2$ each independently represent optionally substituted linear alkylene of 1 to 6 carbon atoms, optionally substituted linear oxyalkylene of 1 to 6 carbon atoms, or linear alkyl ester of 2 to 6 carbon atoms. The following are

examples of the structures of the linear alkyl ester of 2 to 6 carbon atoms.

[Chem. 9]

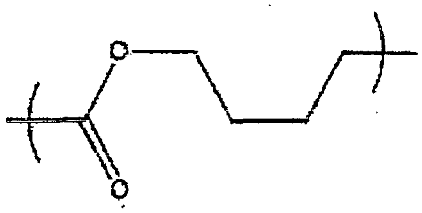

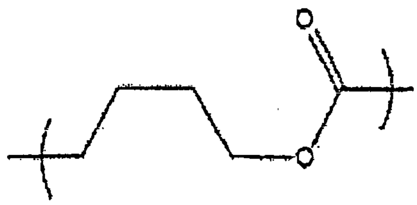

Examples of the possible substituents of $R^1$ and $R^2$ include a fluorine atom, a chlorine atom, hydroxyl, cyano, methyl, ethyl, n-propyl, isopropyl, methoxy, ethoxy, n-propoxy, isopropoxy, n-butyl, isobutyl, and t-butyl group. Preferred are a fluorine atom, hydroxyl, cyano, methyl, and methoxy.

At least one of $Ar^1$, $Ar^2$, and $Ar^3$ is an optionally substituted bivalent fused aromatic ring group, or an optionally substituted bivalent heterocyclic aromatic group. Containing an optionally substituted bivalent fused aromatic ring group or an optionally substituted bivalent heterocyclic aromatic group within the molecule is preferable because it tends to increase the rigidity of the cured solid phase of polymeric resin, and make $\tau_1$ and $\tau_2$ shorter.

Further preferably, the polymer precursor represented by the general formula (1) is a polymer precursor represented by the following general formula (2).

[Chem. 10]

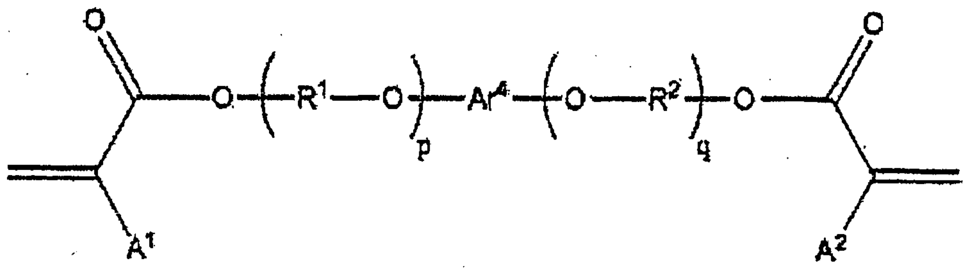

(2)

In formula (2), $A^1$ and $A^2$ each independently represent a hydrogen atom, or methyl,
$Ar^4$ represents an optionally substituted bivalent fused aromatic hydrocarbon group or an optionally substituted bivalent fused heterocyclic group,
$R^1$ and $R^2$ each independently represent optionally substituted alkylene of 2 to 6 carbon atoms, and
p and q each independently represent 0 or 1.

The optionally substituted bivalent aromatic hydrocarbon group and the optionally substituted bivalent heterocyclic group represented by $Ar^4$ have the same definitions as those exemplified for $Ar^1$, and the possible substituents are also as defined for $Ar^1$. Preferred for the curability of the polymer precursor are the following structures.

[Chem. 11]

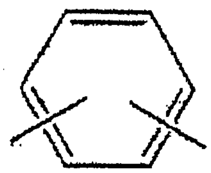

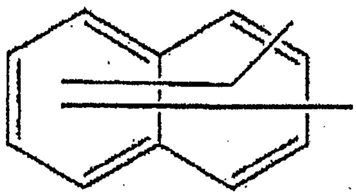

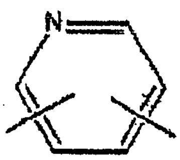

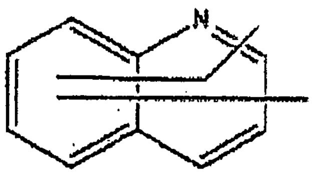

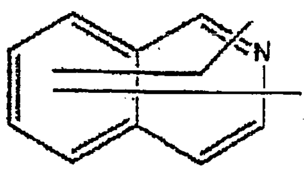

$Ar^4$ is preferably an optionally substituted bivalent fused aromatic hydrocarbon group in terms of improving the mechanical strength of the solid phase of polymeric resin, preferably an optionally substituted bivalent fused aromatic hydrocarbon group of 6 or more carbon atoms. The number of carbon atoms is preferably 30 or less, more preferably 26 or less, particularly preferably 18 or less because an excessively large molecular size offers little spatial freedom for the polymerization reaction of the polymer precursor, and prevents a polymerization reaction from sufficiently taking place.

$Ar^4$ is preferably an optionally substituted bivalent benzene ring or an optionally substituted bivalent naphthalene ring. For the curability of the polymer precursor, $Ar^4$ is particularly preferably an optionally substituted bivalent naphthalene ring.

$Ar^4$ in formula (2) is preferably a strong electron donating group for the polymer groups. $Ar^4$ may binds to -O- at any position, and the molecule preferably forms a linear structure. For example, bonds are formed preferably at positions 1 and 4 in the case of a benzene ring, and at positions 1 and 4 or positions 2 and 6 in the case of a simple naphthalene ring.

Specific examples of the polymer precursor represented by general formula (1) are given below. However, the present invention is not limited to the following structures unless these exceed the substance of the invention.

[Chem. 12]

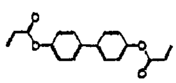 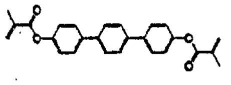 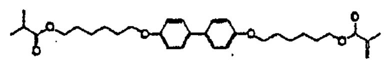

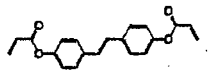 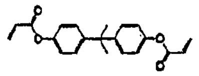 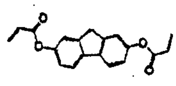

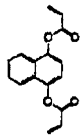 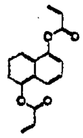 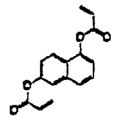 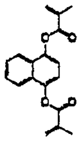 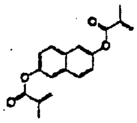 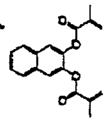

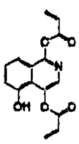 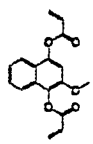 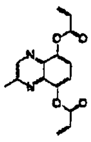 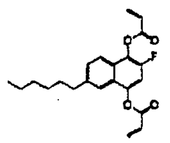 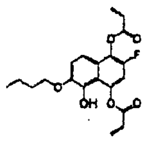

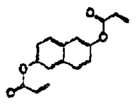 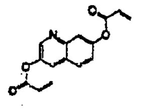 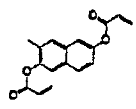 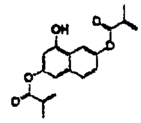 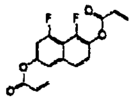

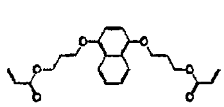 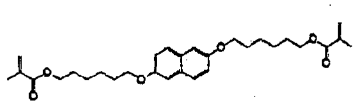

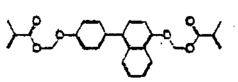 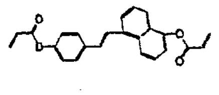 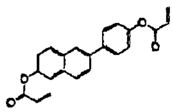

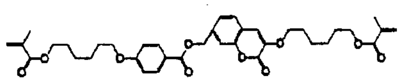

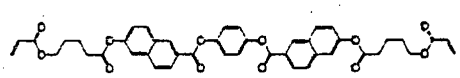

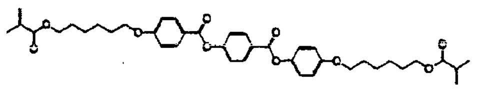 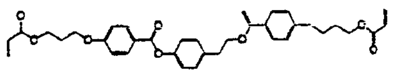

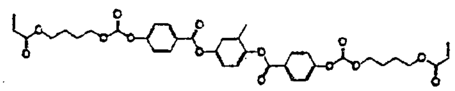 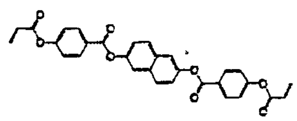

The polymer precursor used for the liquid crystal light modulating layer of the present invention may be only one of the polymer precursors represented by the formula (1), or may be two or more of the polymer precursors represented by the formula (1).

The proportion of the polymer precursor represented by general formula (1) with respect to the other polymer precursors used in the screen employed in the present invention is not particularly limited, as long as it is not detrimental to the advantages of the present invention. However, the repeating unit represented by general formula (1) is preferably 30 mass% or more, further preferably 50 mass% or more, most preferably 80 mass% or more.

When the proportion of the polymer precursor represented by the formula (1) is too small, screen production time, contrast, and/or response time may become insufficient. The upper limit of the polymer precursor represented by the formula (1) is 100 mass%.

When the polymeric resin in the solid phase of polymeric resin of the present invention is a copolymer, the copolymer may be any of an alternate copolymer, a block copolymer, a random copolymer, and a graft copolymer.

<Other>

The chiral nematic liquid crystal phase in the screen may contain components such as a polymerization initiator, a light stabilizer, an antioxidizing agent, a thickener, a polymerization inhibitor, a photosensitizer, an adhesive, a defoaming agent, and a surfactant.

These other components may be mixed in any proportions within a content range that is not detrimental to the performance of the screen.

The polymer precursor may be cured by using any method, including light curing and heat curing. Preferably, the polymer precursor is light cured, particularly by using ultraviolet light or near-ultraviolet light Any light source may be used for photopolymerization, provided that it has a spectrum in the absorption wavelengths of the radical photopolymerization initiator used. Typically, any light source that can emit light of 220 nm to 450 nm wavelengths may be used. Examples of such light sources include a high-pressure mercury lamp, a ultra high-pressure mercury lamp, a halogen lamp, a metal halide lamp, a UV-LED (Light Emitting Diode), a blue LED, and a white LED. The light source may be used with other members such as a heat-ray cut filter, a UV cut filter, and a visible light cut filter. Light may irradiate the screen from the side of at least one of the transparent substrates, and may irradiate the both sides of the screen when the substrates sandwiching the liquid crystal composition are both transparent. Photoirradiation may be performed either at once or in divided portions. It is also possible to use a PSCOF (Phase Separated Composite Organic Film; V. Vorflusev and S. Kumar, Science 283, 1903 (1999)), which provides a radiance distribution along the screen thickness, and continuously varies the density of the solid phase of polymeric resin.

The radiance of the light irradiating the screen in light curing is typically 0.01 $mW/cm^2$ or more, preferably 1 $mW/cm^2$ or more, further preferably 10 $mW/cm^2$ or more, particularly preferably 30 $mW/cm^2$ or more. Polymerization may fail to sufficiently take place when the radiance to too small. The liquid crystal composition is sufficiently light cured when the cumulative amount of radiation is typically 2 $J/cm^2$ or more, preferably 3 $J/cm^2$ or more. Photoirradiation time may be decided according to the radiation power of the light source, and is typically within 200 seconds, preferably within 60 seconds for improved productivity. Light should preferably be irradiated for at least 10 seconds. The repetition durability of the screen may suffer when the photoirradiation time is too short. When the screen is a large-area sheet-like screen using plastic film substrates, the screen may be continuously irradiated by moving the light source or the sheet. The moving speed may be adjusted according to the radiance of the light source.

The liquid crystal light modulating layer obtained as above contains the chiral nematic liquid crystal being dispersed in the form of particles or forming a continuous layer in a thin film of transparent polymer. The contrast becomes most desirable when the chiral nematic liquid crystal forms a continuous layer.

<Screen>

The screen used in the present invention includes a pair of oppositely disposed substrates at least one of which is transparent and that have electrodes, and a liquid crystal light modulating layer provided between the pair of substrates having an electrode, the liquid crystal light modulating layer containing a complex of a chiral nematic liquid crystal and a polymeric resin. The liquid crystal light modulating layer is obtained by curing a liquid crystal composition configured from a polymerizable monomer and a chiral nematic liquid crystal.

The screen used in the present invention is not particularly limited, as long as it has the foregoing structure. The following describes a representative screen structure.

At least one of the substrates, preferably both substrates are transparent. Examples of the substrate material include inorganic transparent materials such as glass, and quartz, and colorless transparent, colored transparent, or nontransparent materials such as metals, metal oxides, semiconductors, ceramics, plastic plates, and plastic films. The electrodes are formed on the substrates by forming a thin film of, for example, metal oxide, metal, semiconductor, or organic conductive material over the whole surface or a part of the substrates by using a known coating method or printing method, or a vapor deposition method such as sputtering. The electrodes may be one obtained after partial etching of a conductive thin film formed on the substrates. In order to obtain a large-area screen in particular, it is desirable for productivity and processibility to use electrode substrates that include an ITO (a mixture of indium oxide and tin oxide) electrode formed on a transparent polymer film such as PET and PEN by using a method such as a vapor deposition method (e.g., sputtering), and a printing method. Wires for connecting the electrodes to each other or to outside may be provided on the substrates. For example, the substrates may be electrode substrates for segment driving or matrix driving, or may be electrode substrates for active matrix driving. In the case of electrode substrates for segment driving, strip electrodes may be disposed side by side on one of the substrates along the shorter side of the strip to form strip segments with the solid electrode formed on the other substrate, or strip electrodes may be used for the both substrates to form segments in a matrix by being orthogonally disposed opposite each other.

The electrode surface on the substrates may be covered, either in part or as a whole, with a protective film or an alignment film formed of an organic compound such as polyimide, polyamide, polyvinyl alcohol, silicon, and a cyan

compound, or an inorganic compound such as $SiO_2$, $HO_2$, and $ZrO_2$, or a mixture thereof. The substrates may be subjected to an alignment treatment to align the liquid crystal with respect to the substrate surface. Any alignment treatment may be used, provided that the chiral nematic liquid crystal in contact with the substrates takes a planar structure. For example, the both substrates may be homogenously aligned, or may be aligned in a hybrid fashion so that the alignment is homogenous for one of the substrates, and is homeotropic for the other substrate. For alignment treatment, the electrode surface may be directly rubbed, or a common alignment film such as polyimide used for TN (Twisted Nematic) liquid crystals, and STN (Supper Twisted Nematic) liquid crystals may be used. The alignment film may be produced by using an optical alignment method, in which the organic thin films on the substrates are made anisotropic by irradiation of anisotropic light such as linearly polarized light.

The solid phase of polymeric resin in the liquid crystal light modulating layer may serve as an alignment film.

An adhesive layer containing a resin material for bonding and supporting the substrates may be provided at the peripheral portion of the opposing substrates, as appropriate. Leaking of the liquid crystal or other components from the end surfaces or the liquid crystal injection opening of the screen can be prevented by sealing these portions of the screen with adhesive materials such as tapes (e.g., an adhesive tape, a thermocompression bonding tape, and a heat curable tape), and/or curable resins or thermoplastic resins such as a heat-curable resin, a light-curable resin, moisture curable resin, a room-temperature curable adhesive, an anaerobic adhesive, an epoxy adhesive, a silicone adhesive, a fluororesin adhesive, a polyester adhesive, and a vinyl chloride adhesive. The seal may also serve to prevent deterioration of the screen. The screen may be protected by covering the whole end surfaces, or by injecting a curable resin or thermoplastic resin into the screen through an end surface, and solidifying these resins inside the screen. The end surfaces may be further covered with tapes.

A spherical or cylindrical spacer such as glass, plastic, ceramic, or a plastic film may be provided between the opposing substrates. The spacer may be disposed in the liquid crystal composition, or may be fixed in the liquid crystal light modulating layer between the substrates. It is also possible to spray the spacer over the substrates, or mix the spacer with an adhesive inside the adhesive layer when assembling the substrates into the screen.

The liquid crystal light modulating layer contained in the screen is formed as follows. For example, a pair of oppositely disposed electrode substrates with a spacer is formed into a sealed cell with an adhesive layer formed at the peripheral portion of the substrates with materials such as a light-curable adhesive, and dipped in the liquid crystal composition under ordinary pressure or in a vacuum to inject the liquid crystal composition into the cell through one or more cut-out portions formed in the adhesive layer. Alternatively, the liquid crystal composition is applied on one of the substrates with a coater, and held between the substrates by using a known method such as by placing a substrate over the liquid crystal composition coated on the other substrate. The liquid crystal composition is then polymerized and cured by irradiation of light such as ultraviolet rays, visible light, and an electron beam. Productivity improves with plastic film substrates because plastic film substrates can be produced in a continuous manner by supplying a spacer-dispersed liquid crystal composition between the electrode substrates while the substrates are being continuously supplied between, for example, a pair of rollers, and continuously curing the liquid crystal composition under light between the substrates.

At least one surface of the screen may be covered with an antireflective film, an anti-glare film, a UV shield film, or an antifouling film. For example, an antireflective film covering the both surfaces of the screen prevents reflection of external light at the substrate surface, and improves the appearance of the screen.

<Image Projector>

The image projector used in the present invention may be any image projector that can project an image in a time-sharing fashion. For example, the image projector may be configured to include a shutter between the light source and the screen. The shutter may be a common mechanical shutter, or other types of shutter such as a liquid crystal light valve. For example, a liquid crystal light valve using a ferroelectric liquid crystal or a transmissive-scattering liquid crystal mode may be used. When polarizing plates are used as the shutter, it is preferable that the polarization of the emergent rays from the image projection unit of the projector is along the transmission axis of the incident-side polarizing plate of the shutter. This makes it possible to use light more efficiently. Without using a shutter, the image projection timing by the image projection unit may be directly synchronized with the drive timing of the screen's liquid crystal layer switching between a light-transmitting state and a light-scattering state. In the case of a liquid crystal projector or a DMD (Digital Micromirror Device) projector, the light source may be turned on or off, instead of using a shutter. In this case, the light source may use a high-speed switching LED. Examples of the image projector include commercially available liquid crystal projectors, CRT (Cathode Ray Tube) projectors, LED projectors, and laser projectors. Aside from using these projectors, light from a light source such as a lamp, an LED, an OLED, and a laser may be modulated with a light valve, a color filter, a mirror, or the like. The image projector should preferably be used with a control unit when the image projector is not provided with a control unit that controls the image projection timing.

<Synchronization Method>

The image display device of the present invention includes at least one screen that is disposed relative to the image projector, and the screen and the image projector are synchronized such that the image projector projects an image on a part of the screen or on the whole screen when the screen is in a light-scattering state or while the screen is making a transition from a light-transmitting state to a light-scattering state, and that the image projector does not project an image when the screen is in a light-transmitting state.

FIG. 2 shows an exemplary structure of the display device of the present invention. The display device is a rear-projection display device in which an image projector 2 and an observer O are on the opposite sides of a display screen 1. The observer O is able to see the background B (product) over the display screen 1. The drive timings of the display screen 1 and the image projector 2 are controlled by signals from a control unit 3.

<Control Unit>

The image display device of the present invention includes a control unit. The control unit controls the periodic switching of the screen between a light-transmitting state and a light-scattering state.

A control unit that controls the switching of the image projection timing of the image projector may also be provided, as required.

The image projector projects an image on the screen at controlled timings, for example, as shown in FIGS. 3, 4, and 5. FIGS. 3, 4, and 5 are time charts of (a) applied voltage to the liquid crystal light modulating layer of the screen, (b) parallel light transmittance of the screen, and (c) image projection from the image projector. FIG. 3 represents an example in which image projection starts at the switching of the screen from a light-transmitting state to a light-scattering state, and ends at the timing when the screen completely switches to a light-transmitting state from a light-scattering state. Here, the image projector projects an image while the parallel light transmittance of the screen is below $T_{min}$. FIG. 4 represents an example in which the time of the voltage application to the liquid crystal light modulating layer is the same as the time of the image projection by the image projector. FIG. 5 represents an example in which the image projector projects an image while the parallel light transmittance of the screen is the lowest at $T_{min}$.

The image projector should preferably project an image as long as possible because it increases the luminance of the displayed image and improves the visibility. However, the light may reach the observer through the screen, or flickers may occur in the displayed image when the image is projected while the parallel light transmittance of the screen is not low enough. It is therefore preferable that the image projection period occurs after the screen has completely switched to a light-scattering state, and continues for the time period in which the parallel light transmittance remains constant. $T_{min}$ is preferably 30% or less.

One image projector may be provided for a single screen, or two or more image projectors may be provided for a single screen. When two or more image projectors are provided for a single screen, the image projectors may project images at the same location of the screen, or at different locations of the screen. Two or more screens may be disposed relative to a single image projector. When two or more screens are disposed relative to a single image projector, the screens may be disposed side by side on the same plane, or may be disposed in series on top of each other.

When the screen has segments, and allows the individual segments to be independently driven, an image may be projected on only one of the segments, or on two or more of the segments or all of the segments.

When an image is displayed on adjacent screens or segments, the synchronous driving may be performed at the same timing for all the display regions, or at different timings for different screens or segments. In the latter case, the image visibility can be improved by sequentially projecting an image from one screen or segment to another so that an image is always projected in any of the display regions. For example, when the screen is divided into N segments, an image can be projected across all the segments of the screen in one cycle by changing the target segment one after another between adjacent segments every $1/(F \times N)$ seconds, where F is the frequency (Hz) of the periodic driving of the screen, and 1/N is the duty ratio of the light-scattering state per segment. For such driving, it is preferable that the timing of pulse voltage application to the next segment precedes the image projection switch timing by $\tau_1$, taking into account the response time of the screen switching to a light-scattering state.

When using an image projector that forms an image by scanning light, the screen may be divided into strip segments that are disposed side by side in the direction of the shorter side of the strip so that the scan line is directed along the longer side of the segments, and the sub-scan line is directed along the longer side of the segments. In this way, a moving image, requiring high-speed imaging, can be displayed with good visibility in a simple configuration. The light scanning method may be any of raster scan, vector scan, and interlace scan. For image color reproducibility and image projector size, an image projector that scans light for imaging preferably uses a laser light source.

Examples

The present invention is described below in greater detail using Examples. The present invention, however, is not limited by the following examples unless these exceed the substance of the invention.

<Screen Haze Measurement Method>

Haze and light transmittance were measured at 25°C by using the double-beam method with a haze computer Hz-2 (SUGA) and a C light source. In the present invention, the screen haze and light transmittance measurements are performed according to JIS K7136 (2000). Haze is measured as a time-average quantity.

<Measurement Methods of Screen Parallel Light Transmittance, Response Time, and Duty Ratio>

Screen response time was measured at room temperature (25°C). A halogen lamp was used as the light source, and light was perpendicularly incident on the screen under a predetermined burst voltage. The luminance L of the transmitted light through the element was measured with a Media Display Tester 3298F (YOKOGAWA) used as a detector. Applied waveform and response waveform were monitored with a digital oscilloscope.

The parallel light transmittance T (%) of the element was calculated by using the formula $L/L_0 \times 100$, where $L_0$ is the luminance of the blank. It is assumed here that the parallel light transmittance under no applied voltage is $T_{max}$, the minimum value of parallel light transmittance under applied voltage is $T_{min}$, the start time of pulse voltage application is $t_1$, and the end time of voltage application is $t_2$. The rise response time, $\tau_1$, is defined as the time it takes for the parallel light transmittance to first reach $T_{10}$ from $t_1$, and the fall response time, $\tau_2$, is defined as the time for the parallel light transmittance to first reach $T_{90}$ from $t_2$. $T_{10}$ and $T_{90}$ are represented as follows.

$$T_{10} = 0.1 \times (T_{max} - T_{min})$$

$$T_{90} = 0.9 \times (T_{max} - T_{min})$$

The relationship between applied waveform and screen response waveform is represented in FIG. 6. The applied waveform had the burst waveform shown in FIG. 6, and was applied after setting predetermined values for frequency F and duty ratio $D_V$. The pulse amplitude V was 100 Vp-p.

The duty ratio D of the periodic switching between the light-transmitting state and the light-scattering state of the screen was calculated by using $D = \tau_{ON}/(\tau_{ON} + \tau_{OFF})$, where $\tau_{ON}$ is the time in which the screen parallel light transmittance is 30% or more, and $\tau_{OFF}$ is the time in which the screen parallel light transmittance is less than 30% in one cycle of switching.

<Measurement Method of Liquid Crystal-Isotropic Phase Transition Temperature (Tni) of Chiral Nematic Liquid Crystal and Liquid Crystal Composition>

A chiral nematic liquid crystal (liquid crystal alone, or a mixture of liquid crystal and a chiral agent) or a liquid crystal composition was mixed, and a phase transition or a phase separation was observed with a polarizing microscope as it occurred with temperature increase.

<Measurement Method of Liquid Crystal Dielectric Constant Anisotropy (Δε)>

The dielectric anisotropy (Δε) of the liquid crystal was determined from $\Delta\varepsilon = \varepsilon_1 - \varepsilon_2$. $\varepsilon_1$ in the dielectric constant in the long axis direction of the liquid crystal molecules, and $\varepsilon_2$ is the dielectric constant in the short axis direction of the liquid crystal molecules.

Dielectric constants ε ($\varepsilon_1$ and $\varepsilon_2$) are represented by ε = Cd/S, where C is the capacitance of the liquid crystal, d is the thickness of the liquid crystal layer, and S is the area of the overlapping portion of the electrodes of the two electrode substrates.

[Example 1]

A chiral nematic liquid crystal (a) was prepared by mixing a chiral agent (CB-15, Merck Japan; 12.0 wt%) of

the structural formula (I) below with a cyano nematic liquid crystal (PDLC-005, Hebei Luquan New Type Electronic Materials Co. Ltd; 88.0 wt%; Tni = 98°C; $\Delta\varepsilon$ = 11.8). The chiral nematic liquid crystal (a) had a pitch p of 1.2 $\pm$ 0.1 $\mu$m.

The chiral nematic liquid crystal (a) (95.0 wt%) was mixed with a monomer (Ac-N, Kawasaki Kasei Chemicals; 2.4 wt%) of the structural formula(II) below, a monomer (Mc-N, Kawasaki Kasei Chemicals; 2.4 wt%) of the structural formula (III) below, and a polymerization initiator (Lucirin TPO, BASF JAPAN; 0.2 wt%) of the structural formula (IV) below. The mixture was then stirred, and filtered to prepare a liquid crystal composition (A) (Tni = 94°C).

The liquid crystal composition (A) was injected into an empty cell assembled from transparent glass substrates with electrodes (the distance d between the electrode substrates = 10 $\mu$m). The cell was irradiated with UV light (wavelength 365 nm) from an LED light source at room temperature on the both surfaces (1.6 J on each surface) to cure the monomers and obtain a screen (A-1).

[Chem. 13]

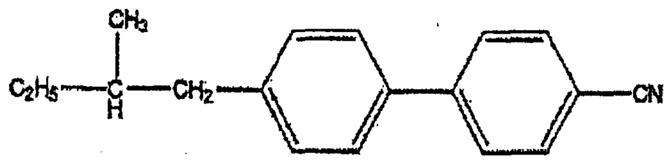

(I)

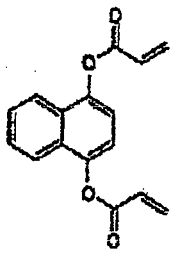

(II)

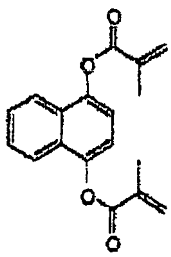

(III)

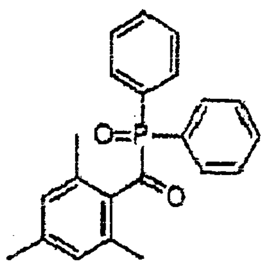

(IV)

The screen (A-1) had the reverse mode, turning from transparent to nontransparent in response to applied voltage. The screen (A-1) was measured for haze by applying a 100-Hz rectangular wave (V (Vp-p)). The result is shown in Table 1.

[Example 2]

The liquid crystal composition (A) was injected into an empty cell assembled from transparent glass substrates with electrodes (the distance d between the electrode substrates = 12 μm). The glass substrates had homogenously aligned alignment films on the transparent electrodes. The cell was irradiated with UV light (wavelength 365 nm) from an LED light source at room temperature on the both surfaces (3.0 J on each surface) to cure the monomers and obtain a screen (A-2).

The screen (A-2) had the reverse mode, turning from transparent to nontransparent in response to applied voltage. The screen (A-2) was measured for haze by applying a 100-Hz rectangular wave voltage (V (Vp-p)). The result is shown in Table 1.

[Example 3]

The chiral nematic liquid crystal (a) (95.0 wt%) was mixed with a monomer (2,6-diacryloyloxynaphthalene; 4.8 wt%) of the structural formula (V) below, and a polymerization initiator (Lucirin TPO, BASF JAPAN; 0.2 wt%) of the structural formula (IV). The mixture was stirred, and filtered to prepare a liquid crystal composition (B) (Tni = 94°C).

The liquid crystal composition (B) was injected into an empty cell assembled from transparent glass substrates with electrodes (the distance d between the electrode substrates = 10 μm). The glass substrates had homogenously aligned alignment films on the transparent electrodes. The cell was irradiated with UV light (wavelength 365 nm) from an LED light source at room temperature on the both surfaces (3.0 J on each surface) to cure the monomers and obtain a screen (B-1).

[Chem. 14]

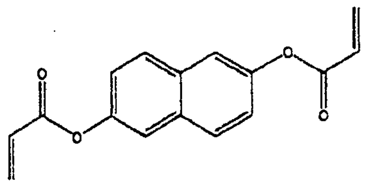

(V)

The screen (B-1) had the reverse mode, turning from transparent to nontransparent in response to applied voltage. The screen (B-1) was measured for haze by applying a 100-Hz rectangular wave voltage (V (Vp-p)). The result is shown in Table 1.

[Comparative Example 1]

An ester nematic liquid crystal (820050, LCC; 93.7 wt%; Tni = 100.1°C; Δε = -6.0) was mixed with a monomer (ST03776, SYNTHON Chemicals GmbH & Co.; 5.1 wt%) of the structural formula (VI) below, a monomer (A-PTMG-65, Shin-Nakamura Chemical Co., Ltd.; 0.9 wt%) of the structural formula (VII) below, and a polymerization initiator benzoin isopropyl ether (Tokyo Chemical Industry; 0.2wt%) of the structural formula (VIII) below. The mixture was stirred, and filtered to prepare a liquid crystal composition (C) (Tni = 95°C).

The liquid crystal composition (C) was injected into an empty cell assembled from transparent glass substrates with electrodes (the distance d between the electrode substrates = 12 μm). The glass substrates had homeotropically aligned alignment films on the transparent electrodes. The cell was irradiated with UV light (wavelength 365 nm) from an LED light source at room temperature on the both surfaces (3.0 J on each surface) to cure the monomers and obtain a screen (C-1).

[Chem. 15]

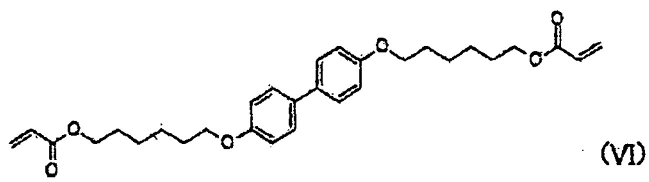

(VI)

$$H_2C=HCOCO-(CH_2CH_2CH_2CH_2O)_n-COCH=CH_2$$

n=9 (VII)

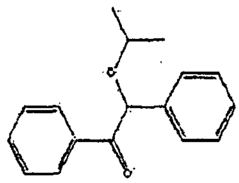

(VIII)

The screen (C-1) had the reverse mode, turning from transparent to nontransparent in response to applied voltage. The screen (C-1) was measured for haze by applying a 100-Hz rectangular wave voltage (V (Vp-p)). The result is shown in Table 1.

[Table 1]

| | Ex. 1 | Ex. 2 | Ex. 3 | Com. Ex. 1 |
|---|---|---|---|---|
| | A-1 | A-2 | B-1 | C-1 |
| V (Vp-p) | Haze (%) | Haze (%) | Haze (%) | Haze (%) |
| 0 | 3.8 | 3.3 | 1.9 | 5.9 |
| 10 | 3.8 | 3.3 | 1.9 | 6.3 |
| 20 | 3.8 | 3.3 | 2.0 | 8.7 |
| 30 | 4.2 | 3.3 | 2.0 | 28.1 |
| 40 | 6.6 | 3.5 | 2.2 | 77.4 |
| 50 | 73.5 | 5.6 | 9.0 | 90.7 |
| 60 | 89.2 | 80.0 | 94.6 | 93.4 |
| 70 | 92.8 | 95.3 | 97.1 | 94.1 |
| 80 | 93.2 | 97.7 | 94.8 | 94.4 |
| 90 | 91.7 | 98.0 | 92.2 | 94.6 |
| 100 | 88.9 | 97.7 | 88.0 | 94.8 |

[Example 4]

An image display device was produced with the screen (A-1) of Example 1, as shown in FIG. 7. Shown in FIG. 7 are a light source 11, a liquid crystal light valve 12, a lens 13, a light chopper 14, an image projector 15, a screen 16, an image display device 17, and a luminance meter 18.

A burst voltage with an amplitude V of 100 Vp-p, a frequency F of 40 Hz, and a duty ratio $D_V$ of 0.10 was applied

to the liquid crystal screen portion of the image display device. The image projector was used to project a white and a black test image in synchronization with the application of the driving waveform. For each projected test image, radiance was measured with a radiance meter specbos 1200 (JETI Technische Instrumente GmbH.) from 10° angle with respect to normal to the screen portion of the image display device ($\theta$ = 10°). The radiance spectra are shown in FIG. 8.

Table 2 presents the optical characteristics (D, OFF haze, $\tau_1$, $\tau_2$, $T_{min}$), and the see-through display characteristics (ON haze, radiance contrast, flickers) of the screen against parameters (V, $D_v$, F) of the voltage waveform applied to the screen (A-1). In table 2, "NF" and "F" mean "no flickers" and "flickers", respectively.

In Example 4, the screen was driven at D = 0.06, $\tau_1$ = X, $\tau_2$ = Y, and $T_{min}$ = 23.2%. The ON haze was 10.2%, and the background was clearly visible with no blur. The radiance C/R was 127.9, and the image was bright. There were no flickers on the screen.

[Examples 5 and 6]

The optical characteristics (D, OFF haze, $\tau_1$, $\tau_2$, $T_{min}$), and the see-through display characteristics (ON haze, radiance contrast, and flickers) of the screen against parameters (V, $D_V$, F) of the voltage waveform were evaluated by using the same image display device used in Example 4, except that the parameters (V, $D_v$, F) of the voltage waveform were changed as shown in Table 2.

In Examples 5 and 6, D ranged from 0.01 to 0.20. The OFF haze was 10% or less, $\tau_1$ and $\tau_2$ were 3.0 msec or less, and $T_{min}$ was 30% or less in the both examples.

The ON haze was 20% or less in both of these examples, and the background was clearly visible with no blur. The radiance C/R was 60 or more, and the image was bright. There were no flickers on the screen.

[Examples 7 to 11]

The optical characteristics (D, OFF haze, $\tau_1$, $\tau_2$, $T_{min}$), and the see-through display characteristics (ON haze, radiance contrast, and flickers) of the screen against parameters (V, $D_V$, F) of the voltage waveform were evaluated by using the same image display devices used in Examples 4 to 6, except that the screen (A-2) was used. The parameters (V, $D_V$, F) of the voltage waveform are as shown in Table 2.

In Examples 7 and 11, D ranged from 0.01 to 0.20. The OFF haze was 10% or less, $\tau_1$ and $\tau_2$ were 3.0 msec or less, and $T_{min}$ was 30% or less in all of these examples.

The ON haze was 20% or less in all of these examples, and the background was clearly visible with no blur. The radiance C/R was 60 or more, and the image was bright. There were no flickers on the screen.

[Examples 12 to 14]

The optical characteristics (D, OFF haze, $\tau_r$, $\tau_2$, $T_{min}$), and the see-through display characteristics (ON haze, radiance contrast, and flickers) of the screen against parameters (V, $D_V$, F) of the voltage waveform were evaluated by using the same image display devices used in Examples 4 to 6, except that the screen (B-1) was used. The parameters (V, $D_V$, F) of the voltage waveform are as shown in Table 2.

In Examples 12 to 14, D ranged from 0.01 to 0.20. The OFF haze was 10% or less, $\tau_1$ and $\tau_2$ were 3.0 msec or less, and $T_{min}$ was 30% or less in all of these examples.

The ON haze was 20% or less in all of these examples, and the background was clearly visible with no blur. The radiance C/R was 60 or more, and the image was bright. There were no flickers on the screen.

[Comparative Examples 2 and 3]

The optical characteristics (D, OFF haze, $\tau_1$, $\tau_2$, $T_{min}$), and the see-through display characteristics (ON haze, radiance contrast, and flickers) of the screen against parameters (V, $D_V$, F) of the voltage waveform were evaluated by using the same image display devices used in Examples 4 to 6, except that the screen (C-1) was used. The parameters (V, $D_V$, F) of the voltage waveform are as shown in Table 2.

In Comparative Examples 2 and 3, D ranged from 0.01 to 0.20. The OFF haze was 10% or less, $\tau_1$ was 3.0 msec or less, and $T_{min}$ was 30% or less in both Comparative Examples 2 and 3. However, the fall response was slow, with the $\tau_2$ value of 10 msec or more.

The ON haze was 20% or more in Comparative Examples 2 and 3, and the background was blurred, and was not clearly visible. The radiance C/R was 60 or less, and the image did not appear bright. There were flickers on the screen.

[Comparative Example 4]

The optical characteristics (D, OFF haze, $\tau_1$, $\tau_2$, $T_{min}$), and the see-through display characteristics (ON haze, radiance contrast, and flickers) of the screen against parameters (V, $D_V$, F) of the voltage waveform were evaluated in the same manner as in Example 8, except that the parameter $D_v$ of the voltage waveform was changed to 0.30.

In Comparative Example 4, $\tau_1$ and $\tau_2$ were below 3.0 msec, specifically 2.0 msec and 1.8 msec, respectively, and $T_{min}$ was below 30%, specifically 12.4%. However, D was 0.26, above 0.20. The ON haze was 28.9%, above 20%, and the background was blurred, and was not clearly visible.

[Comparative Example 5]

The optical characteristics (D, OFF haze, $\tau_1$, $\tau_2$, $T_{min}$), and the see-through display characteristics (ON haze, radiance contrast, and flickers) of the screen against parameters (V, $D_V$, F) of the voltage waveform were evaluated in the same manner as in Example 8, except that the parameter F of the voltage waveform was changed to 30 Hz.

In Comparative Example 5, D was 0.08, within the 0.01 to 020 range. $\tau_1$ and $\tau_2$ were below 3.0 msec, specifically 1.9 msec, and $T_{min}$ was below 30%, specifically 14.1%. The ON haze was 10.6%, below 20%, and the background was clearly visible with no blur. However, there were flickers on the screen.

[Table 2]

| | Screen | Applied waveform to screen | | | Screen optical characteristics | | | | | See-through display characteristics | | |
|---|---|---|---|---|---|---|---|---|---|---|---|---|
| | | V (Vp-p) | F (Hz) | Dv | D | OFF haze (%) | $\tau_1$ (msec) | $\tau_2$ (msec) | Tmin (%) | ON haze (%) | Radiance C/R | Flickers |
| Ex. 4 | A-1 | 100 | 40 | 0.10 | 0.06 | 3.8 | 1.3 | 1.9 | 23.2 | 10.2 | 127.9 | NF |
| Ex. 5 | A-1 | 100 | 70 | 0.15 | 0.1 | 3.8 | 1.3 | 1.9 | 23.8 | 14.4 | 303.3 | NF |
| Ex. 6 | A-1 | 100 | 100 | 0.20 | 0.12 | 3.8 | 1.5 | 1.0 | 23.4 | 19.4 | 291.5 | NF |
| Ex. 7 | A-2 | 100 | 40 | 0.10 | 0.06 | 3.3 | 1.9 | 1.7 | 14.7 | 10.3 | 127.9 | NF |
| Ex. 8 | A-2 | 100 | 50 | 0.10 | 0.05 | 3.3 | 1.4 | 2.1 | 19.6 | 10.2 | 77.3 | NF |
| Ex. 9 | A-2 | 100 | 50 | 0.15 | 0.14 | 3.3 | 1.9 | 1.7 | 12.6 | 14.2 | 88.6 | NF |
| Ex. 10 | A-2 | 100 | 70 | 0.15 | 0.07 | 3.3 | 1.8 | 0.9 | 18.4 | 14.1 | 292.9 | NF |
| Ex. 11 | A-2 | 100 | 100 | 0.20 | 0.10 | 3.3 | 1.8 | 0.9 | 18.5 | 18.5 | 240.6 | NF |
| Ex. 12 | B-1 | 100 | 40 | 0.10 | 0.03 | 1.9 | 1.2 | 1.7 | 29.1 | 9.5 | 163.8 | NF |
| Ex. 13 | B-1 | 100 | 70 | 0.15 | 0.04 | 1.9 | 1.2 | 1.7 | 27.9 | 9.6 | 274.7 | NF |
| Ex. 14 | B-1 | 100 | 100 | 0.20 | 0.08 | 1.9 | 1.5 | 1.0 | 26.8 | 17.6 | 225.1 | NF |
| Com. Ex. 2 | C-1 | 100 | 50 | 0.10 | 0.06 | 5.9 | 2.1 | 12.1 | 24.9 | 41.9 | 25.5 | F |
| Com. Ex. 3 | C-1 | 100 | 50 | 0.15 | 0.11 | 5.9 | 2.8 | 11.3 | 19.7 | 31.3 | 24.3 | F |
| Com. Ex. 4 | A-2 | 100 | 50 | 0.30 | 0.26 | 3.3 | 2.0 | 1.8 | 12.4 | 28.9 | - | NF |
| Com. Ex. 5 | A-2 | 100 | 30 | 0.10 | 0.08 | 3.3 | 1.9 | 1.9 | 14.1 | 10.6 | - | F |

Flickers were not observed in any of Examples 4 to 14. $T_{min}$ was 30% or less. The ON haze was 20% or less, and the background was sufficiently visible through the screen, both inside and outside of a room.

In Comparative Examples 2 to 4, the ON haze was large, and the background was blurred. In Comparative Example 5, flickers occurred with the F value less than 40 Hz.

While the present invention has been described in detail with reference to a certain embodiment, it will be apparent to a person ordinary skilled in the art that the present invention may be altered or modified in many ways within the scope of the invention. This application is based on Japanese patent application No. 2012-215006 filed September 27, 2012.

[Reference Signs List]

| | |
|---|---|
| 1 | Display screen (screen) |
| 2 | Image projector |
| 3 | Control unit |
| 11 | Light source |
| 12 | Liquid crystal light valve |
| 13 | Lens |
| 14 | Light chopper |
| 15 | Image projector |
| 16 | Screen |
| 17 | Image display device |
| 18 | Luminance meter |
| O | Observer |
| B | Background |
| L | Projection light |

## Claims

1. An image display device comprising:

   at least one screen;
   an image projector for projecting an image on the screen; and
   a control unit adapted to periodically switch the screen between a light-transmitting state and a light-scattering state,
   wherein the screen includes: a pair of oppositely disposed substrates having an electrode, at least one of which is a transparent substrate, and a liquid crystal light modulating layer provided between the pair of substrates having an electrode, the liquid crystal light modulating layer containing a complex that contains a chiral nematic liquid crystal phase of positive dielectric constant anisotropy, and a solid phase of polymeric resin,
   wherein the screen is in a light-transmitting state under no applied voltage,
   wherein substantially all the liquid crystal helical axes are perpendicular to the substrates in a planar phase, and is switchable to a light-scattering state in response to applied voltage, wherein the liquid crystals make a phase transition to a focal conic phase, with the liquid crystal helical axes being randomly oriented,
   wherein the screen and the image projector are synchronized such that the image projector projects an image on a part of the screen or on the whole screen when the screen is in a light-scattering state, and projects no image when the screen is in a light-transmitting state,
   wherein the control unit controls the periodic switching so that a switching frequency is from 40 Hz to 100 Hz, and a light-scattering state duty ratio is from 0.01 to 0.20,
   wherein the screen has a time-averaged haze of 20% or less in a light-scattering state portion under an applied burst voltage having a frequency from 40 Hz to 100 Hz and a light-scattering state duty ratio from 0.01 to 0.20, and wherein haze is defined according to the measurement method of JIS K7136 (2000).

2. The image display device according to claim 1, wherein the periodic switching is performed at $\tau_{ON}/(\tau_{ON} + \tau_{OFF})$ of 0.01 to 0.20, where $\tau_{OFF}$ is a time with a parallel light transmittance of 30% or more, and $\tau_{ON}$ is a time with a parallel light transmittance of less than 30%.

3. The image display device according to claim 1 or 2, wherein the screen has a rise response time $\tau_1$ of 3.0 ms or less, and a fall response time $\tau_2$ of 3.0 ms or less in the process of changing from the light-transmitting state to the light-scattering state and returning to the light-transmitting state when a burst voltage at a frequency from 40 Hz to 100 Hz and a duty ratio from 0.01 to 0.20 is applied to the screen.

4. The image display device according to any one of claims 1 to 3, wherein the screen has a haze of 10% or less under no applied voltage.

5. The image display device according to any one of claims 1 to 4, wherein, when being synchronized such that the image projector projects an image on a part of the screen or on the whole screen when the screen is in a light-scattering state, and projects no image when the screen is in a light-transmitting state, and being driven to periodically switch between the light-transmitting state and the light-scattering state,
a white display-to-black display radiance ratio is 30 or more in all angles within a 30° angle with respect to an incident direction of an image projected by the image projector and falling on the screen.

6. The image display device according to any one of claims 1 to 5, wherein the chiral nematic liquid crystal has a chiral pitch p from 0.3 μm to 3 μm.

7. The image display device according to any one of claims 1 to 6, wherein the ratio d/p of the distance d between the substrates having an electrode, and the chiral pitch p of the chiral nematic liquid crystal is 1 or more.

8. The image display device according to any one of claims 1 to 7, wherein the liquid crystal light modulating layer is obtained by photo-curing a mixture of the chiral nematic liquid crystal of positive dielectric constant anisotropy and a polymer precursor represented by the following general formula (1):

[Chem. 1]

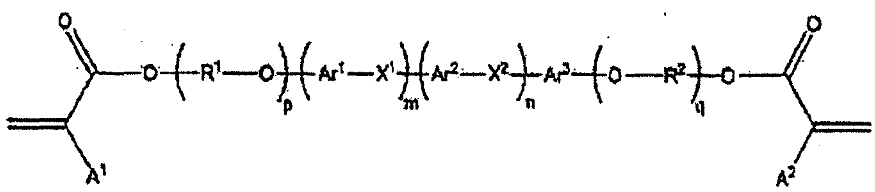

(1)

wherein $A^1$ and $A^2$ each independently represent a hydrogen atom or methyl,
$Ar^1$, $Ar^2$, and $Ar^3$ each independently represent an optionally substituted bivalent aromatic hydrocarbon group, or an optionally substituted bivalent heterocyclic aromatic group,
$X^1$ and each independently represent a direct bond, a carbon double bond, a carbon triple bond, an ether bond, an ester bond, optionally substituted linear alkylene comprising from 1 to 6 carbon atoms, or optionally substituted linear oxyalkylene comprising from 1 to 6 carbon atoms,
$R^1$ and $R^2$ each independently represent optionally substituted linear alkylene comprising from 1 to 6 carbon atoms, optionally substituted linear oxyalkylene comprising from 1 to 6 carbon atoms, or linear alkyl ester comprising from 2 to 6 carbon atoms,
m, n, p, and q each independently represent 0 or 1, and
at least one of $Ar^1$, $Ar^2$ and $Ar^3$ represents an optionally substituted bivalent fused aromatic hydrocarbon group or an optionally substituted bivalent heterocyclic aromatic group.

9. The image display device according to claim 8, wherein the polymer precursor represented by the general formula (1) is represented by the following general formula (2)

[Chem. 2]

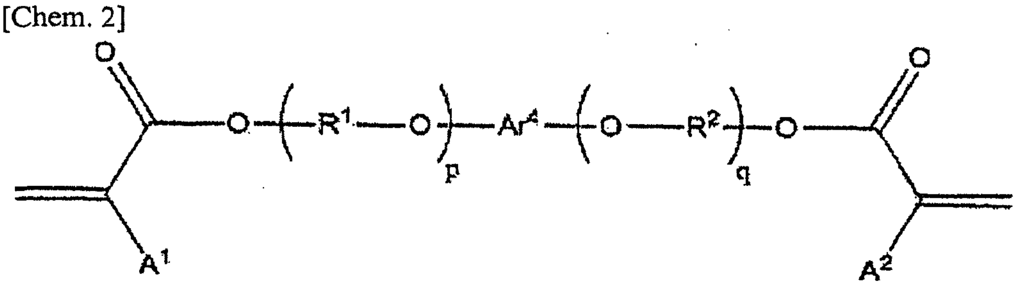

(2)

wherein $A^1$ and $A^2$ each independently represent a hydrogen atom or methyl,
$Ar^4$ represents an optionally substituted bivalent fused aromatic hydrocarbon group, or an optionally substituted bivalent fused aromatic heterocyclic group,
$R^1$ and $R^2$ each independently represent optionally substituted linear alkylene comprising from 1 to 6 carbon atoms, optionally substituted linear oxyalkylene comprising from 1 to 6 carbon atoms, or linear alkyl ester comprising from 2 to 6 carbon atoms, and
p and q each independently represent 0 or 1.

**10.** The image display device according to claim 9, wherein $Ar^4$ in the general formula (2) is an optionally substituted bivalent naphthalene ring.

**Patentansprüche**

**1.** Eine Bildanzeigevorrichtung, umfassend:

mindestens einen Bildschirm;
einen Bildprojektor zum Projizieren eines Bildes auf den Bildschirm; und
eine Steuereinheit, die dazu geeignet ist, den Bildschirm periodisch zwischen einem lichtdurchlässigen Zustand und einem lichtstreuenden Zustand umzuschalten,
wobei der Bildschirm beinhaltet: ein Paar gegenüberliegend angeordneter Substrate mit einer Elektrode, wobei mindestens eines davon ein transparentes Substrat ist, und eine Flüssigkristall-lichtmodulierende Schicht, welche zwischen dem Paar von Substraten mit einer Elektrode bereitgestellt ist, wobei die Flüssigkristall-lichtmodulierende Schicht einen Komplex enthält, welcher eine chirale nematische Flüssigkristallphase mit einer positiven Anisotropie der dielektrischen Konstante, und eine feste Phase eines Polymerharzes enthält,
wobei der Bildschirm, ohne angelegte Spannung in einem lichtdurchlässigen Zustand vorliegt, wobei im Wesentlichen alle helikalen Achsen des Flüssigkristalls senkrecht zu den Substraten in einer planaren Phase sind, und wobei der Bildschirm in Reaktion auf eine angelegte Spannung in einen lichtstreuenden Zustand umschaltbar ist, wobei die Flüssigkristalle einen Phasenübergang zu einer fokal-konischen Phase durchlaufen, wobei die helikalen Achsen des Flüssigkristalls zufällig orientiert sind,
wobei der Bildschirm und der Bildprojektor derart synchronisiert sind, dass der Bildprojektor ein Bild auf einen Teil des Bildschirms oder den ganzen Bildschirm projiziert, wenn sich der Bildschirm in einem lichtstreuenden Zustand befindet und kein Bild projiziert, wenn sich der Bildschirm in einem lichtdurchlässigen Zustand befindet,
wobei die Steuereinheit das periodische Umschalten derart steuert, dass eine Umschaltfrequenz 40 Hz bis 100 Hz beträgt, und eine relative Einschaltdauer (engl. "duty ratio") eines lichtstreuenden Zustands 0,01 bis 0,20 beträgt,
wobei der Bildschirm einen zeitlich gemittelten Trübungswert von 20% oder weniger in einem lichtstreuenden Zustandsabschnitt unter einem angelegten Spannungspuls mit einer Frequenz von 40 Hz bis 100 Hz und einer relativen Einschaltdauer eines lichtstreuenden Zustands von 0,01 bis 0,20 aufweist und wobei der Trübungswert gemäß dem Meßverfahren von JIS K7136 (2000) definiert ist.

**2.** Die Bildanzeigevorrichtung gemäß Anspruch 1, wobei das periodische Umschalten bei $\tau_{ON}/(\tau_{ON} + \tau_{OFF})$ von 0,01 bis 0,20 durchgeführt wird, wobei $\tau_{OFF}$ eine Zeit mit einer parallelen Lichtdurchlässigkeit von 30% oder mehr ist und $\tau_{ON}$ eine Zeit mit einer parallelen Lichtdurchlässigkeit von weniger als 30% ist.

**3.** Die Bildanzeigevorrichtung gemäß Anspruch 1 oder 2, wobei der Bildschirm eine Anstiegsansprechzeit $\tau_1$ von 3,0 ms oder weniger und eine Abfallansprechzeit $\tau_2$ von 3,0 ms oder weniger während dem Verfahren des Wechsels

vom lichtdurchlässigen Zustand in den lichtstreuenden Zustand und der Rückkehr zu dem lichtdurchlässigen Zustand aufweist, wenn ein Spannungspuls bei einer Frequenz von 40 Hz bis 100 Hz und eine relative Einschaltdauer von 0,01 bis 0,20 an den Bildschirm angelegt wird.

**4.** Die Bildanzeigevorrichtung gemäß einem der Ansprüche 1 bis 3, wobei der Bildschirm einen Trübungswert von 10% oder weniger aufweist, wenn keine Spannung angelegt ist.

**5.** Die Bildanzeigevorrichtung gemäß einem der Ansprüche 1 bis 4, wobei, wenn diese derart synchronisiert wird, dass der Bildprojektor ein Bild auf einen Teil des Bildschirms oder den ganzen Bildschirm projiziert, wenn sich der Bildschirm in einem lichtstreuenden Zustand befindet und kein Bild projiziert, wenn sich der Bildschirm in einem lichtdurchlässigen Zustand befindet, und gesteuert wird, um periodisch zwischen dem lichtdurchlässigen Zustand und dem lichtstreuenden Zustand umzuschalten,
ein Strahlungsverhältnis von weißer Anzeige zu schwarzer Anzeige 30 oder mehr in allen Winkeln innerhalb eines 30°-Winkels beträgt, bezogen auf eine einfallende Richtung eines durch den Bildprojektor projizierten und auf den Bildschirm fallenden Bildes.

**6.** Die Bildanzeigevorrichtung gemäß einem der Ansprüche 1 bis 5, wobei der chirale nematische Flüssigkristall eine chirale Steigung p von 0,3 μm bis 3 μm aufweist.

**7.** Die Bildanzeigevorrichtung gemäß einem der Ansprüche 1 bis 6, wobei das Verhältnis d/p des Abstands d zwischen den Substraten mit einer Elektrode und der chiralen Steigung p des chiralen nematischen Flüssigkristalls 1 oder mehr beträgt.

**8.** Die Bildanzeigevorrichtung gemäß einem der Ansprüche 1 bis 7, wobei die Flüssigkristall-lichtmodulierende Schicht durch Photohärtung eines Gemischs der chiralen nematischen Flüssigkristallphase mit einer positiven Anisotropie der dielektrischen Konstante und eines Polymervorläufers, dargestellt durch die folgende allgemeine Formel (1), erhalten wird:

[Chem. 1]

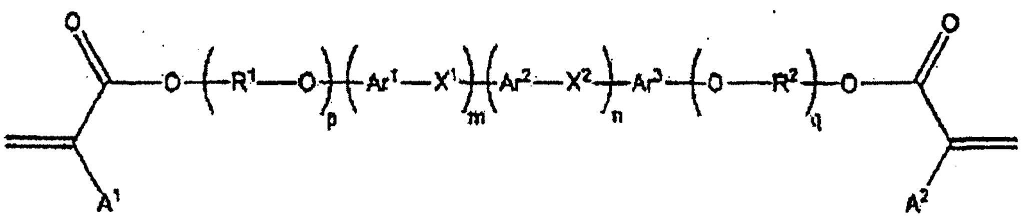

(1)

wobei $A^1$ und $A^2$ jeweils unabhängig ein Wasserstoffatom oder Methyl darstellen,
$Ar^1$, $Ar^2$ und $Ar^3$ jeweils unabhängig eine gegebenenfalls substituierte zweiwertige aromatische Kohlenwasserstoffgruppe oder eine gegebenenfalls substituierte zweiwertige heterocyclische aromatische Gruppe darstellen,
$X^1$ und $X^2$ jeweils unabhängig eine direkte Bindung, eine Kohlenstoff-Doppelbindung, eine Kohlenstoff-Dreifachbindung, eine Etherbindung, eine Esterbindung, gegebenenfalls substituiertes lineares Alkylen, umfassend 1 bis 6 Kohlenstoffatome, oder gegebenenfalls substituiertes geradkettiges Oxyalkylen, umfassend 1 bis 6 Kohlenstoffatome, darstellen,
$R^1$ und $R^2$ jeweils unabhängig gegebenenfalls substituiertes geradkettiges Alkylen, umfassend 1 bis 6 Kohlenstoffatome, gegebenenfalls substituiertes geradkettiges Oxyalkylen, umfassend 1 bis 6 Kohlenstoffatome, oder einen geradkettigen Alkylester, umfassend 2 bis 6 Kohlenstoffatome, darstellen,
m, n, p und q jeweils unabhängig 0 oder 1 darstellen, und
mindestens eines von $Ar^1$, $Ar^2$ und $Ar^3$ eine gegebenenfalls substituierte zweiwertige kondensierte aromatische Kohlenwasserstoffgruppe oder eine gegebenenfalls substituierte zweiwertige heterocyclische aromatische Gruppe darstellen.

9. Die Bildanzeigevorrichtung gemäß Anspruch 8, wobei der Polymervorläufer dargestellt durch die allgemeine Formel (1), durch die folgende allgemeine Formel (2) dargestellt ist

[Chem. 2]

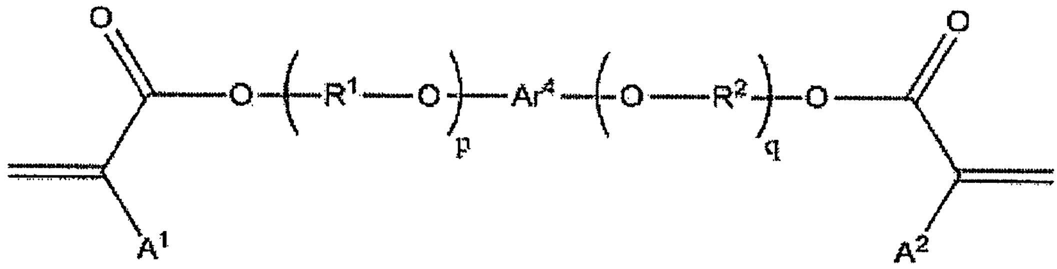

(2)

wobei $A^1$ und $A^2$ jeweils unabhängig ein Wasserstoffatom oder Methyl darstellen,
$Ar^4$ eine gegebenenfalls substituierte zweiwertige kondensierte aromatische Kohlenwasserstoffgruppe oder eine gegebenenfalls substituierte zweiwertige kondensierte aromatische heterocyclische Gruppe darstellt,
$R^1$ und $R^2$ jeweils unabhängig gegebenenfalls substituiertes geradkettiges Alkylen, umfassend 1 bis 6 Kohlenstoffatome, gegebenenfalls substituiertes geradkettiges Oxyalkylen, umfassend 1 bis 6 Kohlenstoffatome, oder einen geradkettigen Alkylester, umfassend 2 bis 6 Kohlenstoffatome darstellen, und
p und q jeweils unabhängig 0 oder 1 darstellen.

10. Die Bildanzeigevorrichtung gemäß Anspruch 9, wobei $Ar^4$ in der allgemeinen Formel (2) ein gegebenenfalls substituierter zweiwertiger Naphthalinring ist.

## Revendications

1. Dispositif d'affichage d'image comprenant :

au moins un écran ;
un projecteur d'image pour projeter une image sur l'écran ; et
une unité de commande adaptée pour commuter périodiquement l'écran entre un état transmettant la lumière et un état diffusant la lumière,
dans lequel l'écran comprend : une paire de substrats disposés de façon opposée ayant une électrode, au moins l'un d'eux étant un substrat transparent, et une couche modulatrice de lumière en cristaux liquides disposée entre la paire de substrats ayant une électrode, la couche modulatrice de lumière en cristaux liquides contenant un complexe qui contient une phase de cristal liquide nématique chiral ayant une anisotropie de constante diélectrique positive, et une phase solide en résine polymère,
dans lequel l'écran est dans un état transmettant la lumière quand il n'y a pas de tension appliquée, dans lequel presque tous les axes hélicoïdaux du cristal liquide sont perpendiculaires aux substrats dans une phase plane, et l'écran peut être commuté à un état diffusant la lumière en réponse à une tension appliquée, dans lequel les cristaux liquides subissent une transition de phase envers une phase conique focale, les axes hélicoïdaux du cristal liquide étant orientés de façon aléatoire,
dans lequel l'écran et le projecteur d'image sont synchronisés de façon que le projecteur d'image projette une image sur une partie de l'écran ou sur tout l'écran quand l'écran est dans un état diffusant la lumière, et ne projette pas d'image quand l'écran est dans un état transmettant la lumière,
dans lequel l'unité de commande commande la commutation périodique de façon que la fréquence de commutation soit de 40 Hz à 100 Hz, et que le rapport cyclique de l'état diffusant la lumière soit de 0,01 à 0,20,
dans lequel l'écran a un voile en moyenne temporelle de 20 % ou moins dans une portion d'état diffusant la lumière sous une tension en salve appliquée ayant une fréquence de 40 Hz à 100 Hz et un rapport cyclique de l'état diffusant la lumière de 0,01 à 0,20,
et dans lequel le voile est défini conformément à la méthode de mesure de la norme JIS K7136 (2000).

2. Dispositif d'affichage d'image selon la revendication 1, dans lequel la commutation périodique est effectuée à

$\tau_{ON}/(\tau_{ON} + \tau_{OFF})$ de 0,01 à 0,20, où $\tau_{OFF}$ est le moment avec une transmittance de la lumière parallèle de 30 % ou plus, et $\tau_{ON}$ est le moment avec une transmittance de la lumière parallèle inférieur à 30 %.

3. Dispositif d'affichage d'image selon la revendication 1 ou 2, dans lequel l'écran a un temps de réponse en élévation $\tau_1$ de 3,0 ms ou moins, et un temps de réponse en chute $\tau_2$ de 3,0 ms ou moins dans le procédé de changement de l'état transmettant la lumière à l'état diffusant la lumière et de retour à l'état transmettant la lumière quand une tension de salve à une fréquence de 40 Hz à 100 Hz et un rapport cyclique de 0,01 à 0,20 sont appliqués à l'écran.

4. Dispositif d'affichage d'image selon l'une quelconque des revendications 1 à 3, dans lequel l'écran a un voile de 10 % ou moins quand aucune tension n'est appliquée.

5. Dispositif d'affichage d'image selon l'une quelconque des revendications 1 à 4, dans lequel, lorsqu'il est synchronisé de façon que le projecteur d'image projette une image sur une partie de l'écran ou sur tout l'écran quand l'écran est dans un état diffusant la lumière, et ne projette pas d'image quand l'écran est dans un état transmettant la lumière, et étant entraîné pour commuter périodiquement entre l'état transmettant la lumière et l'état diffusant la lumière,
le rapport de luminosité de l'affichage blanc à l'affichage noir est de 30 ou plus dans tous les angles situés dans les 30° par rapport à la direction incidente d'une image projetée par le projecteur d'image et tombant sur l'écran.

6. Dispositif d'affichage d'image selon l'une quelconque des revendications 1 à 5, dans lequel le cristal liquide nématique chiral a un pas chiral p de 0,3 μm à 3 μm.

7. Dispositif d'affichage d'image selon l'une quelconque des revendications 1 à 6, dans lequel le rapport d/p de la distance d entre les substrats ayant une électrode et le pas chiral p du cristal liquide nématique chiral est de 1 ou plus.

8. Dispositif d'affichage d'image selon l'une quelconque des revendications 1 à 7, dans lequel la couche modulatrice de lumière en cristaux liquides est obtenue par photodurcissement d'un mélange du cristal liquide nématique chiral ayant une anisotropie de constante diélectrique positive et un précurseur de polymère représenté par la formule générale (1) suivante :

[Formule chimique 1]

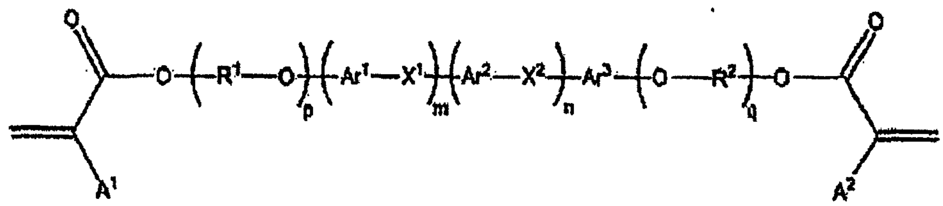

(1)

dans laquelle chacun de $A^1$ et $A^2$ représente indépendamment un atome d'hydrogène ou méthyle,
chacun de $Ar^1$, $Ar^2$ et $Ar^3$ représente indépendamment un groupe hydrocarboné aromatique divalent éventuellement substitué, ou un groupe aromatique hétérocyclique divalent éventuellement substitué,
chacun de $X^1$ et $X^2$ représente indépendamment une liaison directe, une double liaison carbone, une triple liaison carbone, une liaison éther, une liaison ester, un alkylène linéaire éventuellement substitué comprenant de 1 à 6 atomes de carbone, ou un oxyalkylène linéaire éventuellement substitué comprenant de 1 à 6 atomes de carbone,
chacun de $R^1$ et $R^2$ représente indépendamment un alkylène linéaire éventuellement substitué comprenant de 1 à 6 atomes de carbone, un oxyalkylène linéaire éventuellement substitué comprenant de 1 à 6 atomes de carbone, ou un ester alkylique linéaire comprenant de 2 à 6 atomes de carbone,
chacun de m, n, p et q vaut indépendamment 0 ou 1, et
au moins l'un parmi $Ar^1$, $Ar^2$ et $Ar^3$ représente un groupe hydrocarboné aromatique condensé bivalent éventuellement substitué ou un groupe aromatique hétérocyclique divalent éventuellement substitué.

9. Dispositif d'affichage d'image selon la revendication 8, dans lequel le précurseur de polymère représenté par la formule générale (1) est représenté par la formule générale (2) suivante :

[Formule chimique 2]

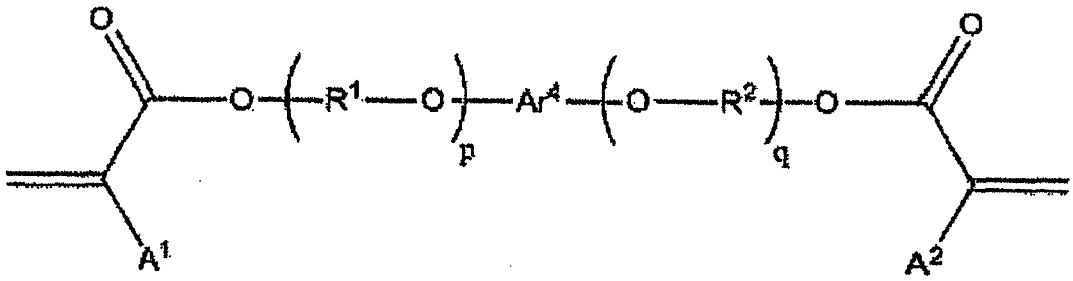

(2)

dans laquelle chacun de $A^1$ et $A^2$ représente indépendamment un atome d'hydrogène ou méthyle, $Ar^4$ représente un groupe hydrocarboné aromatique condensé bivalent éventuellement substitué, ou un groupe hétérocyclique aromatique condensé bivalent éventuellement substitué, chacun de $R^1$ et $R^2$ représente indépendamment un alkylène linéaire éventuellement substitué comprenant de 1 à 6 atomes de carbone, un oxyalkylène linéaire éventuellement substitué comprenant de 1 à 6 atomes de carbone, ou un ester alkylique linéaire comprenant de 2 à 6 atomes de carbone, et chacun de p et q vaut indépendamment 0 ou 1.

**10.** Dispositif d'affichage d'image selon la revendication 9, dans lequel $Ar^4$ dans la formule générale (2) est un cycle naphtalène bivalent éventuellement substitué.

[FIG. 1]

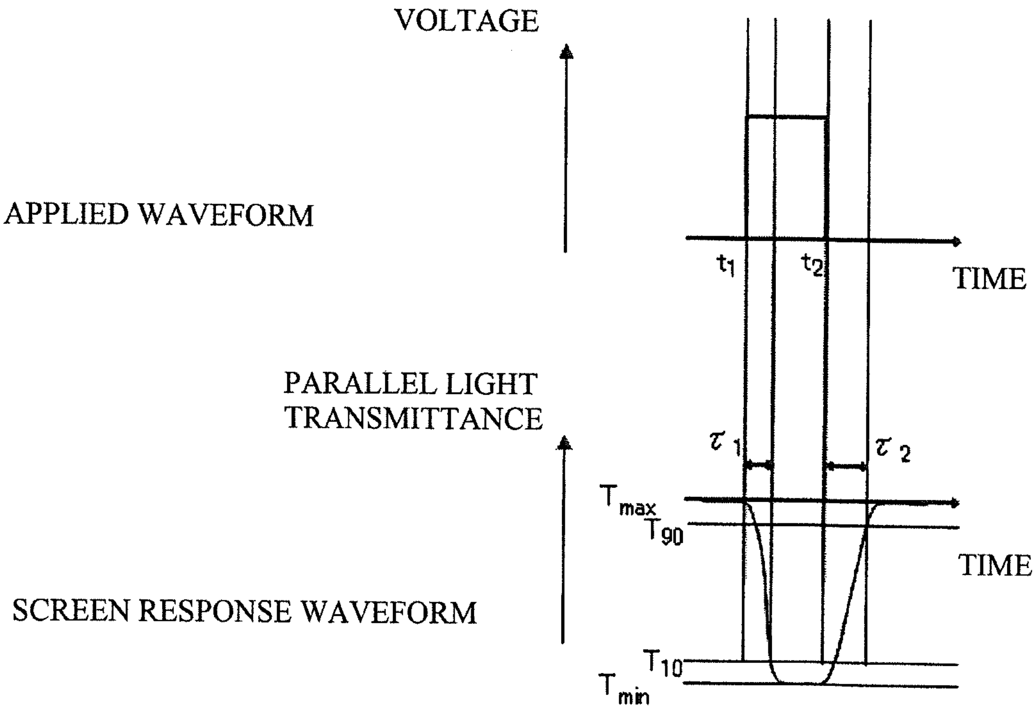
VOLTAGE
APPLIED WAVEFORM
t1
t2
TIME
PARALLEL LIGHT TRANSMITTANCE
τ1
τ2
Tmax
T90
TIME
SCREEN RESPONSE WAVEFORM
T10
Tmin

[FIG. 2]

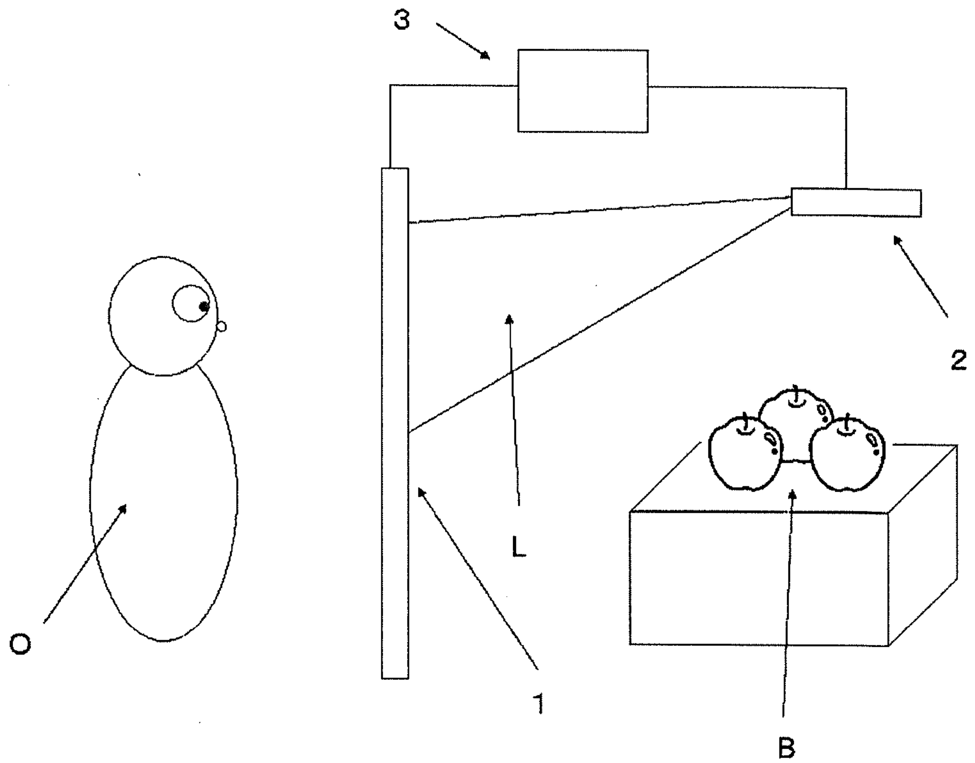
3
2
L
O
1
B

[FIG. 3]

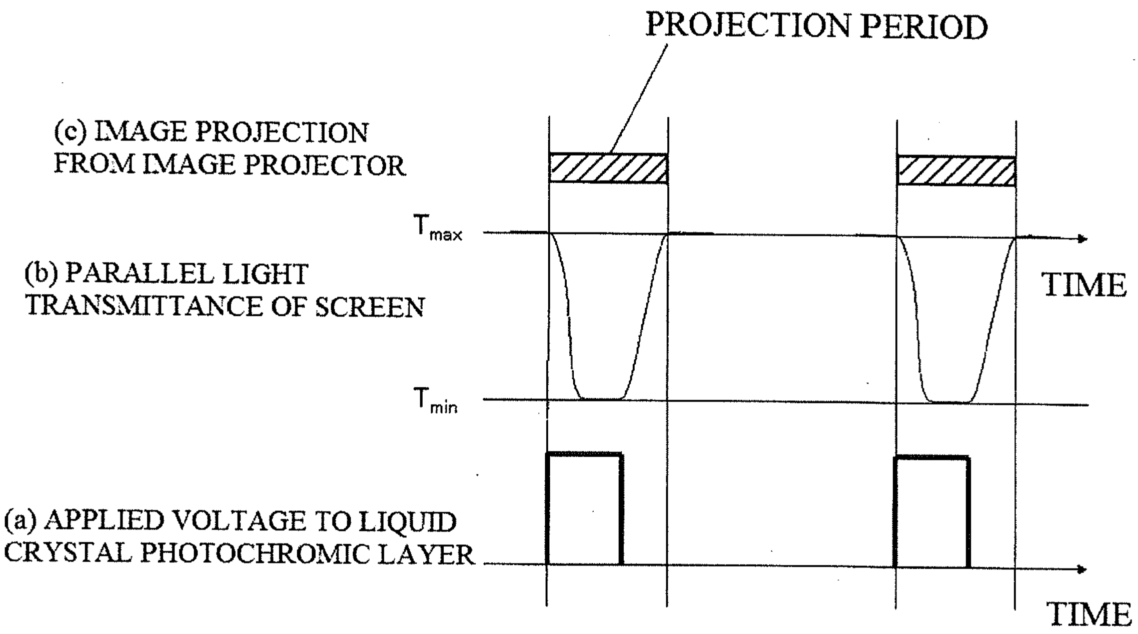
PROJECTION PERIOD
(c) IMAGE PROJECTION FROM IMAGE PROJECTOR
$T_{max}$
(b) PARALLEL LIGHT TRANSMITTANCE OF SCREEN
TIME
$T_{min}$
(a) APPLIED VOLTAGE TO LIQUID CRYSTAL PHOTOCHROMIC LAYER
TIME

[FIG. 4]

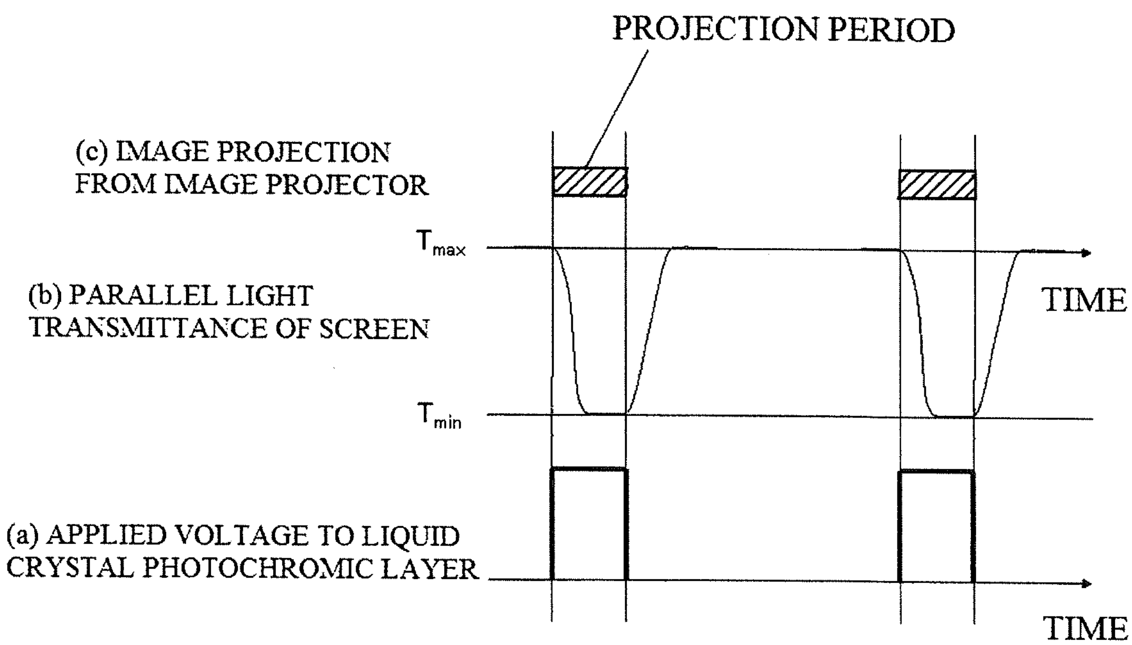
PROJECTION PERIOD
(c) IMAGE PROJECTION FROM IMAGE PROJECTOR
$T_{max}$
(b) PARALLEL LIGHT TRANSMITTANCE OF SCREEN
TIME
$T_{min}$
(a) APPLIED VOLTAGE TO LIQUID CRYSTAL PHOTOCHROMIC LAYER
TIME

[FIG. 5]

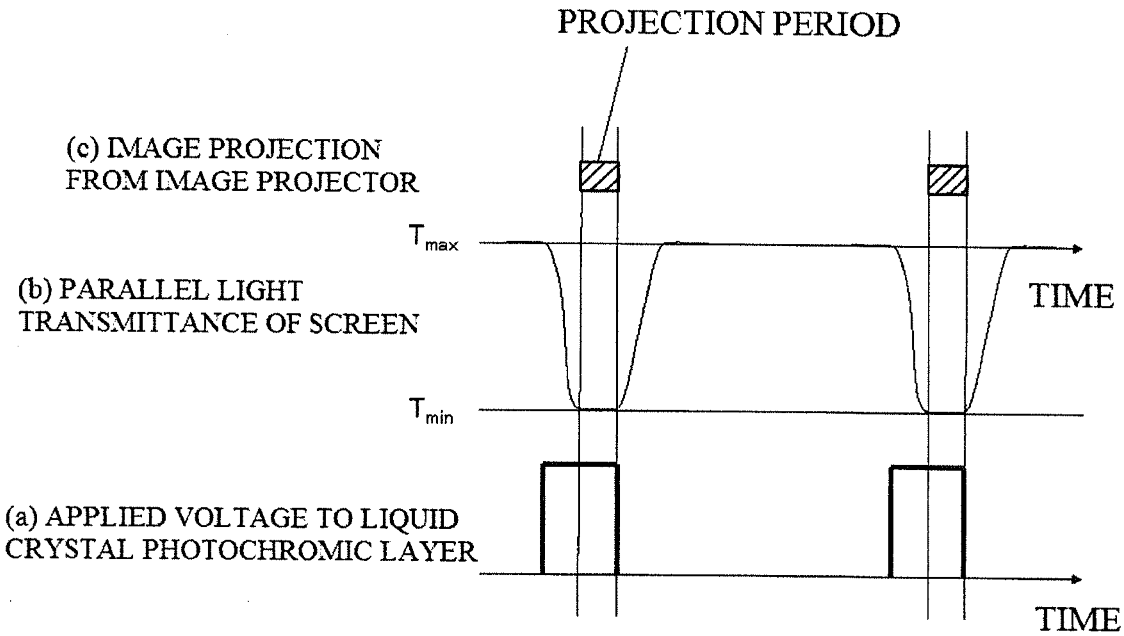
PROJECTION PERIOD
(c) IMAGE PROJECTION FROM IMAGE PROJECTOR
Tmax
(b) PARALLEL LIGHT TRANSMITTANCE OF SCREEN
TIME
Tmin
(a) APPLIED VOLTAGE TO LIQUID CRYSTAL PHOTOCHROMIC LAYER
TIME

[FIG. 6]

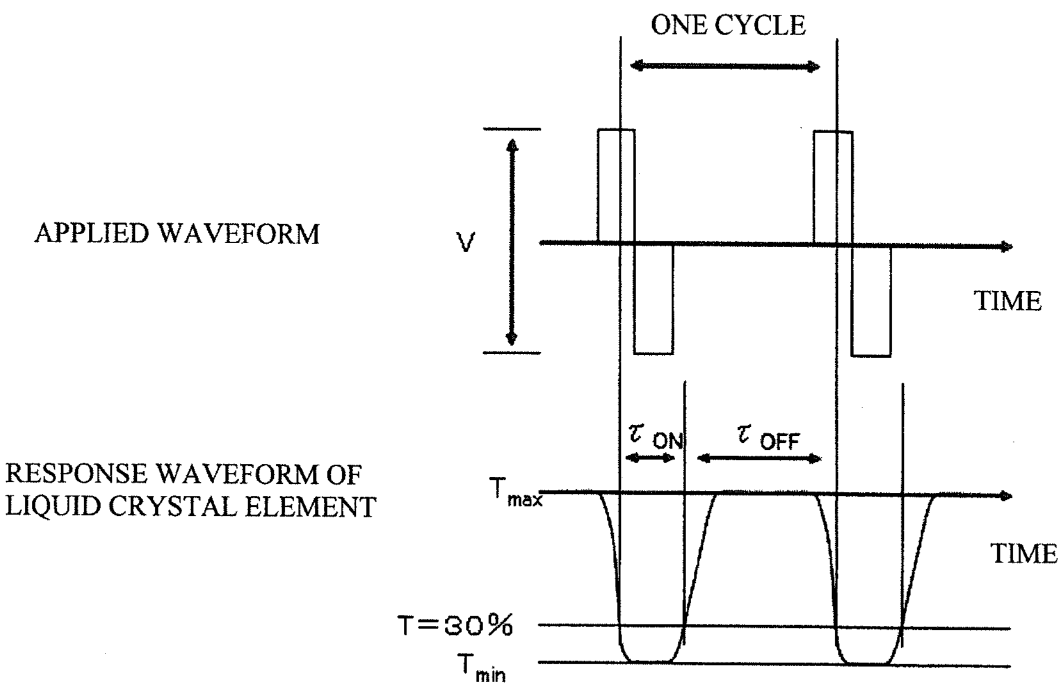
ONE CYCLE
APPLIED WAVEFORM
V
TIME
τ ON
τ OFF
RESPONSE WAVEFORM OF LIQUID CRYSTAL ELEMENT
Tmax
TIME
T=30%
Tmin

[FIG. 7]

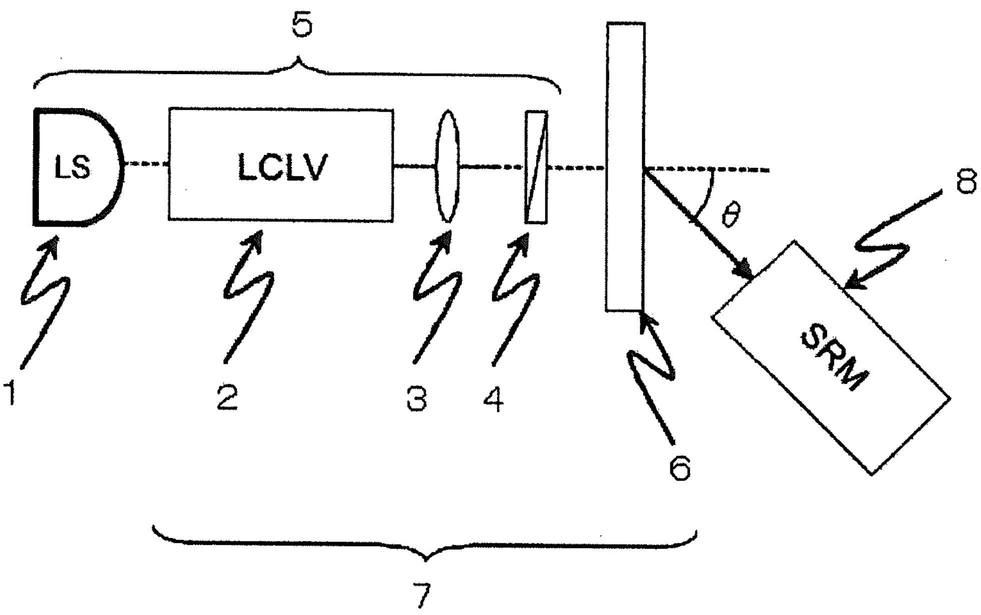

[FIG. 8]

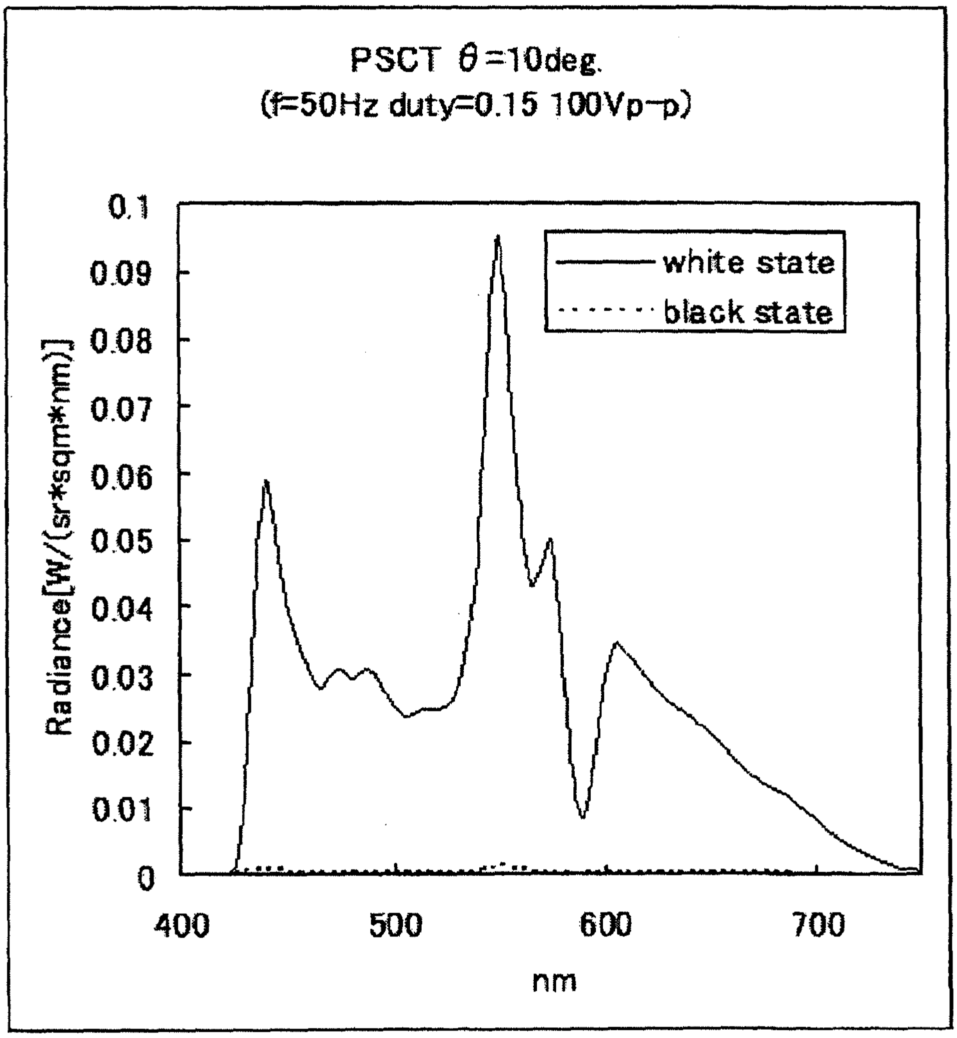
PSCT θ=10deg.
(f=50Hz duty=0.15 100Vp-p)
Radiance[W/(sr*sqm*nm)]
0.1
0.09
0.08
0.07
0.06
0.05
0.04
0.03
0.02
0.01
0
400
500
600
700
nm
white state
black state

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004184979 A
- US 2012140147 A
- WO 2009000521 A1
- US 5437811 A
- JP 2012215006 A


### Non-patent literature cited in the description


- Japan Society for the Promotion of Science 142 Committee. Liquid Crystal Device Handbook. Nihon Kogyo Shimbun, 1989, 152-192
- Ekisho Binran Editorial Committee. Ekisho Binran. Maruzen Co., Ltd, 2000, 260-330
- Ekisho Binran Editorial Committee. Ekisho Binran. Maruzen Co., Ltd, 2000, 365-415
- **V. VORFLUSEV ; S. KUMAR.** Phase Separated Composite Organic Film. *Science,* 1999, vol. 283, 1903